# EUROPÄISCHE PATENTANMELDUNG

(11) **EP 4 678 675 A1**
(43) Veröffentlichungstag der Anmeldung: **14.01.2026**
(21) Anmeldenummer: 25188336.9
(22) Anmeldetag: 09.07.2025
(51) Int. Cl.: C08G 18/42, C08G 18/76, C08K 5/109, C08G 18/64

(54) **HERSTELLUNG VON POLYURETHANSCHAUMSTOFF**

(30) Priorität: 12.07.2024 EP 24188253
(71) Anmelder: Evonik Operations GmbH, 45128 Essen (DE)
(72) Erfinder: Glos, Martin, 46325 Borken (DE); Suchan, Michael, 45894 Gelsenkirchen (DE)
(74) Vertreter: Evonik Patent Association

(57) **Zusammenfassung**

Beschrieben wird eine Zusammensetzung zur Herstellung von Polyurethanschaumstoff, umfassend eine Polyisocyanat-Komponente, eine Polyol-Komponente, wobei die Zusammensetzung zusätzlich mindestens eine organische Verbindung V umfasst, welche mindestens einen Rest R^{A} aufweist, welcher ausgewählt ist aus der Gruppe bestehend aus 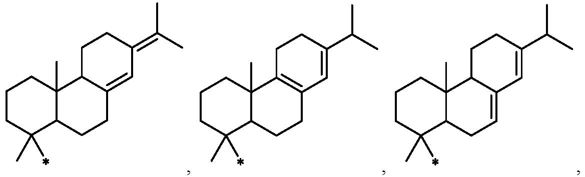 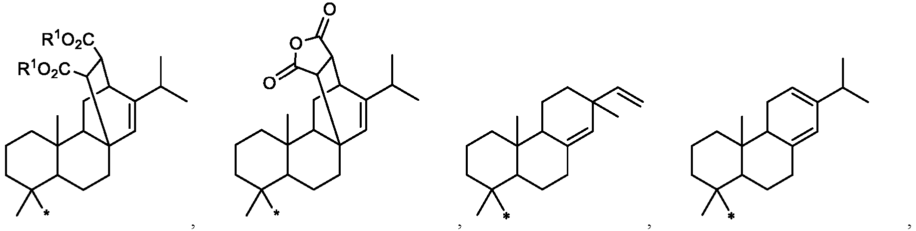 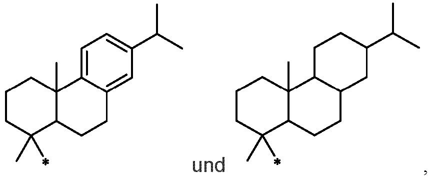 wobei mit * die Bindung an den übrigen Teil der organischen Verbindung V gekennzeichnet ist, und wobei
R¹ = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N.

## Beschreibung

Die vorliegende Erfindung liegt auf dem Gebiet der Polyurethane, insbesondere der Polyurethanschaumstoffe. Vorzugsweise betrifft sie eine Zusammensetzung zur Herstellung von Polyurethanschaumstoff, ein Verfahren zur Herstellung von Polyurethanschaumstoff, sowie den Polyurethanschaumstoff hergestellt nach dem Verfahren und dessen Verwendung.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurate, Polyharnstoffe sowie Uretdion-, Carbodiimid-, Allophanat-, Biuret- und/oder Uretimin-Gruppen enthaltende Polyisocyanat-Reaktionsprodukte verstanden. Unter Polyurethanschaumstoff (PU-Schaumstoff) wird im Rahmen der vorliegenden Erfindung insbesondere Schaumstoff verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden Polyurethan auch weitere funktionelle Gruppen gebildet werden, wie z.B. Allophanate, Biurete, Harnstoffe, Carbodiimide, Uretdione, Isocyanurate und/oder Uretimine, wobei Isocyanurate besonders bevorzugt sind.

Bei der Herstellung von Polyurethan-Schaumstoffen können gewöhnlich zellstabilisierende Additive eingesetzt werden, welche für eine feinzellige, gleichmäßige und störungsarme Schaumstruktur sorgen sollen und damit die Gebrauchseigenschaften, besonders das thermische Isolationsvermögen des Schaumstoffes im wesentlichen Maße positiv beeinflussen. Meist werden in diesem Zusammenhang im Stand der Technik Polyether-modifizierte Siloxane (PES) beschrieben, insbesondere für Hartschaum-Anwendungen. Aber auch die Verwendung Si-freier Surfactants wird im Stand der Technik beschrieben.

Si-freie Surfactants können im Vergleich zu Si-haltigen Surfactants, insbesondere im Vergleich zu den Polyether-modifizierten Siloxanen (PES), ggf. zu verminderten Schaumqualitäten führen. Besonders wenn die PU-Schaumstoffe eine gute Isolationsleistung, also einen niedrigen LambdaWert, erreichen sollen, können oftmals die Si-haltigen Surfactants, also insbesondere die Polyether-modifizierten Siloxanen (PES), gegenüber den Si-freien Surfactants im Vorteil sein.

Allerdings kann die Verwendung von Si-haltigen Surfactants, insbesondere von Polyether-modifizierten Siloxanen (PES), auch Nachteile haben. So können sie ggf. die Löslichkeit der Treibmittel (z.B. Pentane) in den Polyolen verschlechtern. Dies kann besonders stark auftreten, wenn die PES z.B. einen hohen Siloxan-Anteil haben und daher stark hydrophob sind. Des Weiteren basieren die Si-haltigen Surfactants üblicherweise nicht auf nachwachsenden Rohstoffen und sind somit aus Gründen der Nachhaltigkeit von Nachteil.

EP 2511328 A2 beschreibt die Verwendung von Carbamaten als Surfactant zur Schaumstabilisierung.

In DE 1020011007479 A1 werden Mischungen von Säureamiden mit PES zur Verwendung als Schaumstabilisatoren im PU-Hartschaum beschrieben.

In EP 1985642 A1 werden Amidoamine und Imidazole auf Basis von Carbonsäuren und Polyethylen- oder Polypropylen-Aminen, wie beispielsweise Diethylentriamin, Triethylentetramin oder Tetraethylenpentamin als Additive zur Herstellung von PU-Schäumen verwendet.

US 3746663 beschreibt die Verwendung N-Vinylpyrrolidon-basierenden Strukturen zur Verwendung als Surfactant bei der PU-Schaumherstellung.

DE 3724716 C1 beschreibt die Verwendung von Novolak-basierenden Ethoxylaten als Stabilisatoren in der PU-Schaumherstellung.

In der WO 95/16721 A1 wird die Herstellung von PU-Schäumen unter Verwendung von Polyalkylenoxiden beschreiben, wobei die Polyalkylenoxide aufgebaut werden, indem man vorzugsweise 10-90% Butylenoxid verwendet.

EP 1985642 A1 beschreibt eine Zusammensetzung zur Herstellung von PU-Schaum unter Verwendung von Amidamiden und/oder Imidazolen auf Basis von C1-C36 Carbonsäuren.

In US 5236961 wird die Herstellung von Polyurethanschäumen unter Verwendung von Alkylphenol-Ethoxylaten als Schaumstabilisatoren beschrieben

DE 2244350 A1 beschreibt die Verwendung von Copolymeren, die vorzugsweise aus N-Vinylpyrrolidon und Maleinsäureestern hergestellt werden, zur Herstellung von Polyurethanschaum.

Die Verwendung von Si-freien Surfactants in PU-Schäumen ist also aus dem Stand der Technik bekannt.

Allerdings besteht hier weiterhin ein Bedarf an weiteren Si-freien Surfactants. Besonders wären z.B. Si-freie Surfactants wünschenswert, die auf nachwachsenden Rohstoffen basieren, wobei diese Rohstoffe bevorzugt auch keine Anwendung im Nahrungsmittelbereich haben, so dass es hier zu keiner Konkurrenzsituation kommt.

Ein großer Anteil der oben erwähnten Si-freien Surfactants basiert auf Fettsäuren von tierischer oder pflanzlicher Herkunft wie z.B.: Schweineschmalz, Rindertalg, Gänsefett, Entenfett, Hühnerfett, Pferdefett, Walöl, Fischöl, Palmöl, Olivenöl, Avokadoöl, Samenkernöle, Kokosöl, Palmkernöl, Kakaobutter, Baumwollsamenöl, Kürbiskernöl, Maiskeimöl, Sonnenblumenöl, Weizenkeimöl, Traubenkernöl, Sesamöl, Leinsamenöl, Sojabohnenöl. Hierbei handelt es sich chemisch um lineare, teilweise ungesättigte, Carbonsäuren mit unterschiedlichen Kettenlängen, die auf unterschiedlichste Weise derivatisiert werden.

Neben der Verwendung von Si-freien Surfactants in PU-Schäumen ist auch die Verwendung von Kohlenwasserstoffen in PU-Schäumen hinlänglich bekannt. So werden beispielsweise Kohlenwasserstoffe in PU-Schäumen oftmals als Treibmittel verwendet. Hierbei können bevorzugt Verbindungen mit maximal 7, insbesondere 3 bis 7 Kohlenstoffen eingesetzt werden, da diese ihre Siedepunkte im passenden Temperaturbereich haben, so dass sie beim Verschäumungsprozess verdampfen und damit zur Volumenzunahme, also zur Schaumbildung, beitragen. Im fertigen Schaum sind diese Treibmittel dann noch als Zellgas enthalten. Die Verwendung dieser Kohlenwasserstoffe ist in zahlreichen Schriften beschrieben.

US 2011/0218259 A1 beschreibt die Verwendung von Cyclopentan in PU-Hartschaumsystemen mit verbesserter Fließfähigkeit, wie sie z.B. bei der Herstellung von Kühlmöbeln oder Paneelen benötigt werden.

DE3933335 A1 beschreibt die Verwendung von Cyclopentan und Mischungen davon mit Cyclohexan und diversen Kohlenwasserstoffen mit max. 4 Kohlenstoffen, sowie Ether und Fluoralkane, die einen Siedepunkt von kleiner 35°C haben. In der DE3933335 A1 werden also Kohlenwasserstoffe verwendet, die alle bei der PU-Verschäumung verdampfen und somit als Treibmittel dienen.

In WO 2016/202912 A1 werden verschiedene Kohlenwasserstoffe sowie Ether, Ketone, Ester, Acetale und Fluoralkane als Treibmittel beschrieben, wobei die Siedepunkte vorzugweise unter 50°C liegen.

In CN 101880452 A wird die Verwendung von Alkanen mit 14 bis 21 Kohlenstoffen beschrieben als Phasenübergangsmaterial, das als Füllstoff in Mengen von 10 bis 30 Teilen auf 100 Teile Polyol zum Einsatz kommt. Hierbei werden keine Effekte auf die Qualität eines damit hergestellten PU-Schaums hinsichtlich dessen Wärmeleitfähigkeit beschrieben.

JPH09165427 A beschreibt die Verwendung von Alkanen mit 9 bis 12 Kohlenstoffen, die dazu dienen die Lagerstabilität der Polyol-Mischung zu verbessern, speziell für den Fall, wenn Pentan als Treibmittel verwendet wird. In der JPH09165427 A kommen 1 bis 10 Teile der Alkane bezogen auf 100 Teile Polyol zum Einsatz. Hierbei werden keine Effekte auf die Qualität eines damit hergestellten PU-Schaums hinsichtlich dessen Wärmeleitfähigkeit beschrieben.

US 20070066697 A1 beschreibt PU-Weichschäume, die durch Verwendung von Kohlenwasserstoffen mit 10 bis 70 Kohlenstoffen, wobei die Kohlenwasserstoffe vorzugsweise in Mengen von 0,01 bis 100 pphp (pphp = parts per hundred parts of polyol) zugegeben werden, eine bessere Stauchhärte erhalten.

JPH 0418431 A beschreibt die Verwendung von nicht-reaktiven Komponenten wie z.B. Paraffine oder andere Kohlenwasserstoffe, die in Mengen von 0,1 bis 10 pphp zugegeben werden, in PU-Hartschaum, wodurch die Alterung des Schaums hinsichtlich des Lambda-Wertes verbessert werden soll. Hierbei zeigen die Beispiele der JPH 0418431 A, dass die initialen Lambda-Werte bei Zugabe von Paraffin schlechter werden.

In EP 3677610 A1 wird die Verwendung von speziellen Kohlenwasserstoffen in Kombination mit Polyether-modifizierten Siloxanen als Surfactants beschrieben, um PU-Hartschäume mit verbesserten Eigenschaften zu erhalten. Diese Kombination wird als obligat offenbart. Es wird in EP 3677610 A1 keine Möglichkeit beschrieben, verbesserte Eigenschaften von PU-Hartschäumen mit organischen Verbindungen V, wie weiter unten genauer definiert, zu erzielen.

Ebenso ist der Einsatz von Polyalkylsiloxanen aus dem Stand der Technik bekannt, z.B. wie in WO 2020/144003 A1 beschrieben.

Die konkrete Aufgabe der vorliegenden Erfindung war es, die Bereitstellung von PU-Schaumstoffen unter Einsatz weiterer Si-freier Surfactants zu ermöglichen.

Im Rahmen der vorliegenden Erfindung konnte überraschend gefunden werden, dass der Einsatz mindestens einer organischen Verbindung V, wie weiter unten genauer definiert, die Lösung der Aufgabe ermöglicht.

Beispielsweise können zu solchen organischen Verbindungen V, wie weiter unten genauer definiert, vorzugsweise Abietinsäure und/oder bestimmte ihrer Derivate gezählt werden.

Abietinsäure ist eine Harzsäure. Sie kann z.B. aus Baumharz gewonnen werden. Abietin(säure)-Derivate sind aus dem Stand der Technik bekannt. Als Verwendung von Abietin(säure)-Derivaten wird im Stand der Technik die Herstellung von Polyester-Polyolen beschrieben.

US 4758379 beschreibt die Herstellung von Abietinsäure-Estern, bevorzugt mit DEG, TEG, EG, PG oder auch Pentaerithritol. Es werden in US 4758379 aber keine Verwendungen der erhaltenen Ester beschrieben.

WO 2019/006431 A1 beschreibt die Herstellung von Harzsäure-Estern mit niedriger Farbzahl und deren Verwendung in Straßenmarkierungen, Kleber-Zusammensetzungen. Insbesondere beschreibt WO 2019/006431 A1 ein Verfahren zur Herstellung eines Kolophoniums mit heller Farbe sowie ein Verfahren zur Herstellung eines Kolophoniumesters mit heller Farbe.

CN 110387027 A beschreibt die Herstellung eines Sprühschaums auf Basis von nachwachsenden Rohstoffen, wobei unter anderem auch ein Abietinsäure-Ester-Polyol als Polyol-Komponente eingesetzt wird.

In WO 2019/177903 A1 wird ein Weichschaum mit längerer Rückstellzeit hergestellt, indem ein Tackifier eingesetzt wird, und wobei keine physikalischen Treibmittel eingesetzt werden. Es handelt es sich bei dem Schaum in WO 2019/177903 A1 um einen offenzelligen flexiblen Schaum.

CN 103709357 A beschreibt Abietinsäure-Polyole mit OH-Zahl 400 bis 460 mg KOH/g. Diese hohen OH-Zahlen sind notwendig zur Verwendung als Polyol. Eine Verwendung als Surfactant wird in CN 103709357 A nicht beschrieben.

Ebenso beschreibt EP 2677030 A1 Tallöl/ Abietinsäure-basierende Polyole, die durch Amidierung mit DEA bzw. Veresterung mit TEA hergestellt werden. Auch in EP 2677030 A1 wird keine Verwendung als Surfactant beschrieben.

Auch in CN 101045785 werden Abietinsäure-basierende Polyole beschrieben, die OH-Zahlen von 250 bis 500 mg KOH/g haben. Eine Verwendung als Surfactant wird in CN 101045785 nicht beschrieben.

CN 101029124 beschreibt Abietinsäure-basierende Polyole auf Basis von Dimer-Abietinsäure oder Phenol-Abietinsäure. Eine Verwendung als Surfactant wird CN 101029124 nicht beschrieben.

Die konkrete Aufgabe der vorliegenden Erfindung wird vom Gegenstand der Erfindung gelöst. Der Gegenstand der Erfindung ist eine Zusammensetzung zur Herstellung von Polyurethanschaumstoff, umfassend eine Polyisocyanat-Komponente, eine Polyol-Komponente, optional mindestens einen Katalysator, der die Ausbildung einer Urethan- oder Isocyanurat-Bindung katalysiert, optional mindestens ein Treibmittel,
wobei die Zusammensetzung zusätzlich mindestens eine organische Verbindung V umfasst, welche mindestens einen Rest R^{A} aufweist, welcher ausgewählt ist aus der Gruppe bestehend aus 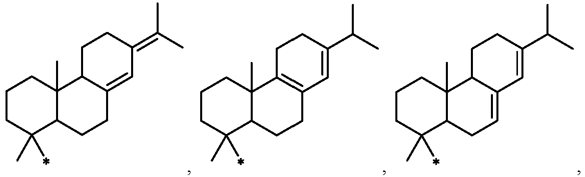 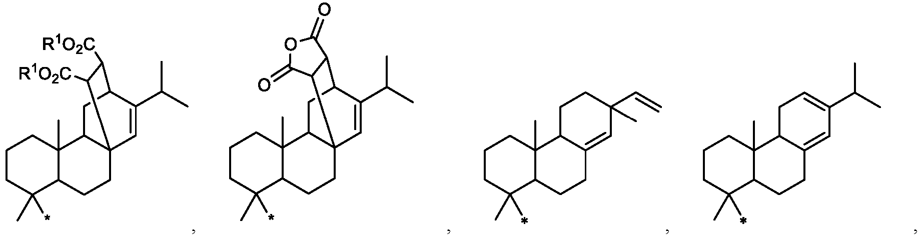 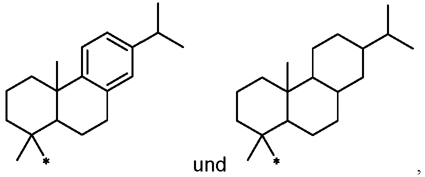
wobei mit * die Bindung an den übrigen Teil der organischen Verbindung V gekennzeichnet ist, und wobei
R¹ = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N.

Der Gegenstand der Erfindung ermöglicht die Bereitstellung von PU-Schaumstoff, insbesondere PU-Hartschaumstoff. Überraschenderweise wurde gefunden, dass mit dem Einsatz der mindestens einen organischen Verbindung V das Spektrum bzw. die Bandbreite der für die Herstellung von PU-Schaumstoff einsetzbaren Si-freien Surfactants noch einmal erweitert werden kann. Vorteilhafterweise kann die Erfindung somit auch einen Beitrag dazu leisten, PU-Schaumstoffbasierte Produkte wie z.B. Isolationspaneele oder Kühlmöbel, hervorzubringen.

Ein weiterer Vorteil der Erfindung liegt z.B. darin, dass der Einsatz der mindestens einen organischen Verbindung V vorzugsweise auch in Kombination mit anderen Surfactants, wie z.B. mit Polyether-modifizierten Siloxanen und/oder anderen Si-freien Surfactants möglich ist.

Vorteilhafterweise kann es die Erfindung ermöglichen, zu PU-Schaumstoff mit zumindest ausreichender oder vorteilhafter Qualität, z.B. mit Blick auf die Porenstruktur und/oder z.B. mit Blick auf die Isolationsleistung, zu gelangen.

Es ist bevorzugt, dass die mindestens eine organische Verbindung V ausgewählt ist aus der Gruppe bestehend aus 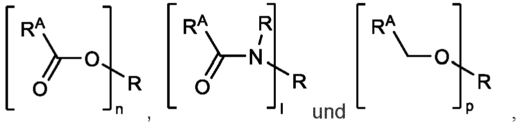 wobei
n = 1 bis 5,
l = 1 bis 5,
p = 1 bis 5,
R = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N,
R^{A} = unabhängig voneinander, gleich oder verschieden, ausgewählt ist aus der Gruppe bestehend aus 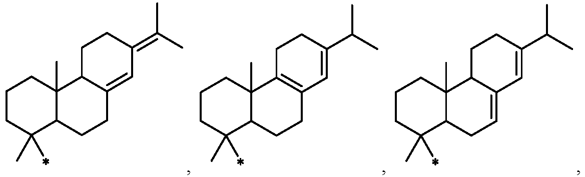 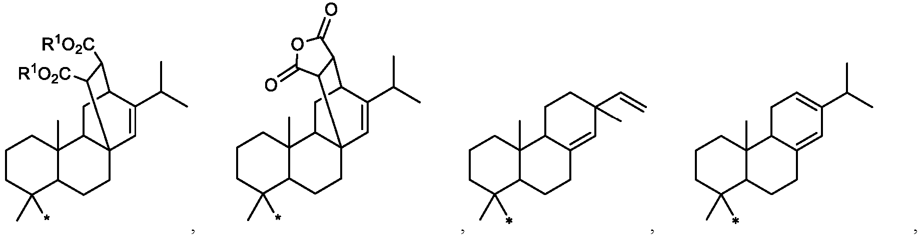 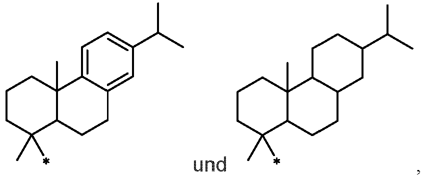
wobei mit * die Bindung an den übrigen Teil der organischen Verbindung V gekennzeichnet ist, und wobei
R¹ = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N.

Als ein mögliches Beispiel zur weiteren Veranschaulichung sei hier z.B. ein Di-Ester von Monoethylenglykol als mögliche organische Verbindung V beispielhaft dargestellt, 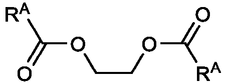 mit R^{A} wie zuvor definiert.

Wäre darin dann beispielsweise R^{A} = 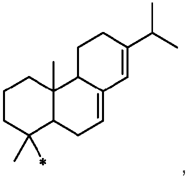 so ergäbe sich in solchem beispielhaften Falle als komplette Strukturformel die folgende Struktur:

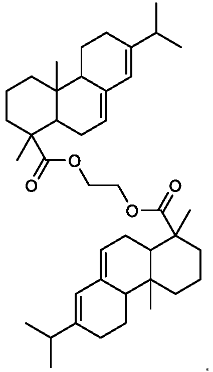

Hieraus ist beispielhaft ersichtlich, wie die Strukturen R^{A} in den organischen Verbindungen V eingebunden sind.

Besonders bevorzugt ist es, wenn die mindestens eine organische Verbindung V ausgewählt ist aus der Gruppe bestehend aus 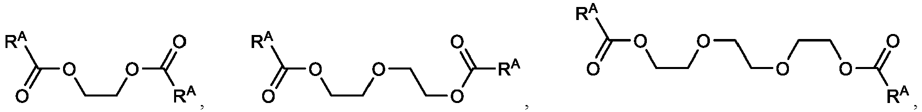 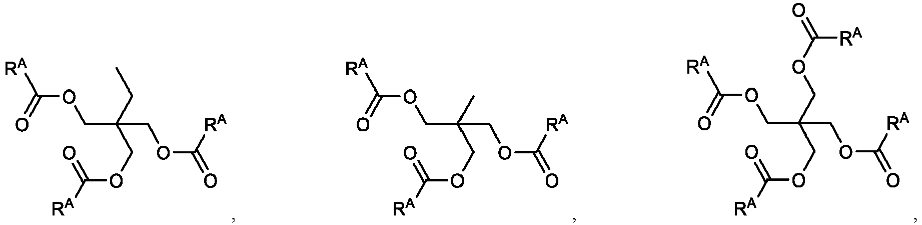 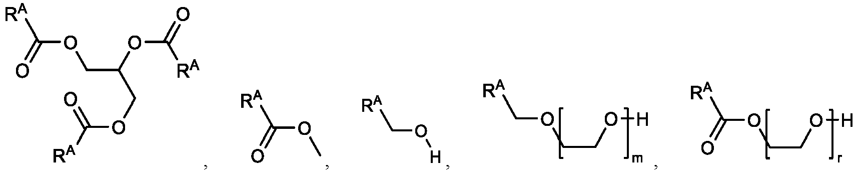 und 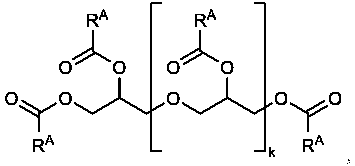 wobei
m = 1 bis 15,
r = 1 bis 15,
k = 1 bis 6,
R^{A} = unabhängig voneinander, gleich oder verschieden, ausgewählt ist aus der Gruppe bestehend aus 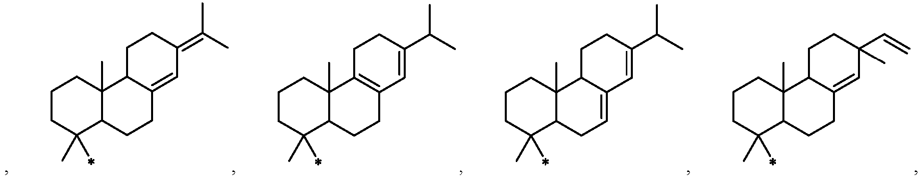 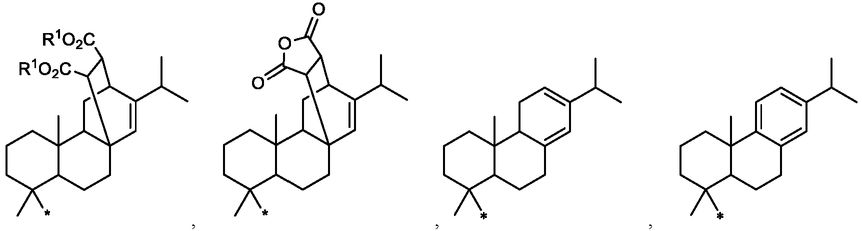 und 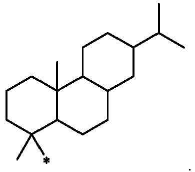
wobei mit * die Bindung an den übrigen Teil der organischen Verbindung V gekennzeichnet ist, und wobei
R¹ = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N,
wobei der Diethylenglykol-Ester, der Triethylenglykol-Ester, der Polyglycerin-Ester, Abietol, hydriertes Abietol und/oder teilhydriertes Abietol ganz besonders bevorzugt sind.

Die Strukturformel von Abietol ist

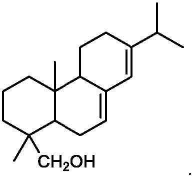

Die mindestens eine organische Verbindung V weist vorzugsweise eine OH-Zahl kleiner 150, bevorzugt kleiner 100, besonders bevorzugt kleiner 50 mg KOH/g auf.

Es ist also bevorzugt, dass eventuell bei der Herstellung der organischen Verbindung V anfallende Nebenbestandteile, die ggf. eine höhere OH-Zahl haben, vorzugsweise nur in entsprechend geringen Anteilen vorliegen, falls sie überhaupt vorhanden sind. Besonders bevorzugt sind solche Nebenbestandteile gar nicht vorhanden. Beispielsweise kann bei der Herstellung von Monoethylenglykol-Ester 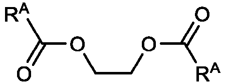 als Nebenbestandteil ggf. der Monoester mit der Formel 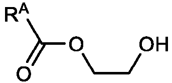 anfallen, dessen OH Zahl sich entsprechend der Formel mit 162 mg KOH/g berechnet.

Um also die bevorzugten OH-Zahlen von kleiner 150 mg KOH/g zu erreichen, ist es bevorzugt, wenn entsprechende OH-Funktionen tragende Nebenbestandteile, die eventuell bei der Herstellung der organischen Verbindung V anfallen, falls sie überhaupt vorhanden sind, nur in entsprechend geringen Anteilen vorhanden sind. Vorzugsweise sind derartige Nebenbestandteile gar nicht vorhanden.

Die Herstellung von besonders bevorzugten organischen Verbindungen V kann beispielsweise auf Basis von Veresterungen, z.B. von Glykolen, Glycerin, Polyglycerin und/oder Pentaerithritol mit Carbonsäuren der allgemeinen Formel R^{A}CO₂H erfolgen, wobei vorzugsweise darauf geachtet wird, dass die Reaktion so gefahren wird, dass vorzugsweise möglichst wenig freie OH-Gruppen im Produkt verbleiben, so dass das Produkt also vorzugsweise eine entsprechend niedrige OH-Zahl hat.

Bevorzugte organische Verbindungen V sind z.B. die folgenden Carbonsäuren, welche der Formel allgemeinen Formel R^{A}CO₂H genügen, 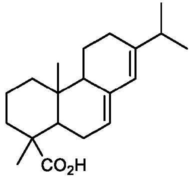 Abietinsäure, 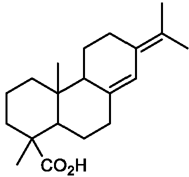 Neoabietinsäure, 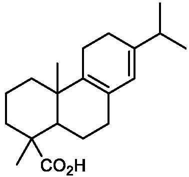 Palustrinsäure, 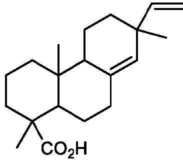 Pimarsäure, 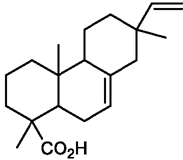 Isopimarsäure, 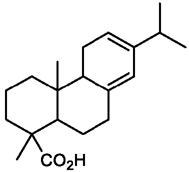 Lävopimarsäure, 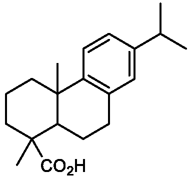 Dehydroabietinsäure und/oder 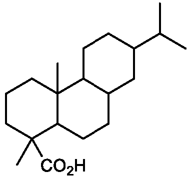 Tetrahydroabietinsäure,
sowie vorzugsweise die Umsetzungsprodukte dieser Carbonsäuren, z.B. im Sinne der Veresterung mit Glykolen, Glycerin, Polyglycerin und/oder Pentaerithriol, oder z.B. im Sinn der Amidierung. Besonders bevorzugt sind die Umsetzungen z.B. zu Estern, Amiden, Imiden, Imidazolinen und/oder Oxazolinen.

Bevorzugte organische Verbindungen V sind z.B. die entsprechenden Ethylenglykol-Carbonsäureester, Diethylenglycol-Carbonsäureester, Triethylenglykol-Carbonsäureester, Glycerin-Carbonsäureester, Pentaerithritol-Carbonsäureester, Trimethylolethan-Carbonsäureester. Trimethylolpropan-Carbonsäureester, Sucrose-Carbonsäureester, Sorbitan-Carbonsäureester und/oder Polyglycerin-Carbonsäureester, wobei hier mit Carbonsäureester die entsprechenden Ester der Carbonsäuren der allgemeinen Formel R^{A}CO₂H gemeint sind.

Es können unterschiedliche Alkohole zur Veresterung eingesetzt werden, wie beispielsweise Butylglykol, Ethylglykol und/oder andere Monoole, ebenso wie Spezies mit mehreren OH-Funktionen wie z.B. Polyglycerine, Sucrose, Sorbitole, Propylenglykol, Dipropylenglykol und/oder Polyalkylenglykole.

Vorzugsweise können als mindestens eine organische Verbindung V z.B. Alkohol-Alkoxylate, vorzugsweise Abietol-Alkoxylate verwendet werden, beispielsweise hergestellt durch Umsetzung von Alkylenoxiden mit Abietol. Bevorzugt sind Ethoxylate und/oder Propoxylate von Abietol. Geeignete Alkohol-Alkoxylate werden weiter noch ausführlicher beschrieben.

Vorzugsweise können z.B. auch Carbonsäureamide als mindestens eine organische Verbindung V eingesetzt werden. Solche Amide können z.B. auf Basis von Aminen und vorzugsweise den oben genannten Carbonsäuren der allgemeinen Formel R^{A}CO₂H hergestellt werden.

Geeignet können beispielsweise Amine sein mit mindestens einer primären oder sekundären AminFunktion zur Amidierung, die ggf. eine oder mehrere Hydroxygruppen aufweisen können. Geeignete Amine sind daher zum Beispiel: Ethylendiamin, Diethylentriamin (DETA), Triethylentetramin (TETA), Tetraethylenpentamin (TEPA), Dipropylentriamin, Tripropylentetramin, Tetrapropylenpentamin, Pentapropylenhexamin, Hexapropylenheptamin, sowie höhere Homologen auf Basis von Ethylendiamin oder Propylendiamin, 1,2-Propylendiamin, 4,4'-Diaminodicyclohexylmethan, 3,3'-Dimethyl-4,4'-diaminodicyclohexylmethan, 4,4-Methylendiphenylendiamin, Isophorondiamin, Trimethylhexymethylendiamin, Neopentandiamin, Octamethylenediamin, Polyetheramine wie Polyetheramin D 2000 (BASF), Polyetheramin D 230 (BASF), Polyetheramin T 403 (BASF), Polyetheramin T 5000 (BASF) oder auch entsprechende Jeffamin-Typen von Huntsman, Piperazin, Aminoethylpiperazin, Bis(aminoethyl)piperazin, 1,3-Diaminopropan, 3-(Cyclohexylamino)propylamin, 3-(Methylamino)propylamin, Dimethylaminopropylamin (DMAPA) , N,N-Bis-(3-aminopropyl)methylamin, (3-(2-Aminoethylamino)propylamin), Dipropylentriamin und/oder (N,N'-Bis-(3-aminopropyl)-ethylendiamin.

Geeignete, mindestens eine OH-Funktion aufweisende Hydroxylamine können zum Beispiel sein: Ethanolamin, Propanolamin, Alkylethanolamine, Arylethanolamin, Alkylpropanolamin, wie zum Beispiel: Diethanolamin, Monoethanolamin, Diisopropanolamin, Isopropanolamin, Methylisopropanolami, Digylkolamin (2-(2-Aminoethoxy)ethanol), Dimethylethanolamin, N-(2-Hydroxyethyl)anilin, 1-(2-Hydroxyethyl)piperazin, 2-(2-Aminoethoxy)ethanol, 3-Amino-1-propanol, 5-Amino-1-pentanol, Butylethanolamin, Ethylethanolamin, N-Methylethanolamin, Aminopropylmonomethylethanolamin, 2-Amino-2-methylpropanol, Trishydroxymethylaminomethan

(THMAM oder TRIS), N-(2-Aminoethyl)ethanolamin (AEEA). Es können auch entsprechende Alkoxylate, insbesondere Ethoxylate und/oder Propoxylate von Aminen verwendet werden, wie z.B. Alkylamine mit einer Hydroxyethyl- oder Hydroxypropyl-Einheit oder beispielsweise N-Hydroxyethyl-Cylohexyldiamin, N-Hydroxethyl-Isophorondiamin, N-Hydroxyethyl-Piperazin und/oder Bis-(hydroxyethyl)toluendiamin.

Vorzugsweise können z.B. auch Alkohol-Alkoxylate als mindestens eine organische Verbindung V eingesetzt werden. Verfahren zur Herstellung von Alkohol-Alkoxylaten sind dem Fachmann bekannt. Die Alkohol-Alkoxylate können vorzugsweise durch Umsetzung von Abietol mit Alkylenoxiden erhalten werden. Bevorzugt kann z.B. ein Abietol-Alkoxylat sein, herstellbar durch Umsetzung von Abietol mit Alkylenoxiden. Die Alkylenoxide lagern sich dabei an den Alkohol unter Ringöffnung an. Die Alkylenoxide werden vorzugsweise ausgewählt aus der Gruppe bestehend aus Ethylenoxid (EO), Propylenoxid (PO), Butylenoxid (BO) und Styroloxid (SO). Die Alkylenoxide können wahlweise einzeln in reiner Form, abwechselnd hintereinander in beliebiger Dosierreihenfolge, aber auch gleichzeitig gemischt zugefügt werden. Dies bestimmt die Sequenz der Oxyalkylen-Einheiten bzw. Alkylenoxy-Einheiten als Wiederholungseinheiten in der entstehenden Polyetherkette. Durch das Verfahren können Polyetherketten aufgebaut werden, die sich dadurch auszeichnen, dass sie hinsichtlich Strukturaufbau und Molmasse gezielt und reproduzierbar hergestellt werden können. Die Abfolge der Wiederholungseinheiten kann in weiten Grenzen durch die Reihenfolge der Zugabe der Alkylenoxide variabel gestaltet werden. Es ist dabei besonders bevorzugt, dass zur Herstellung der Alkohol-Alkoxylate Alkylenoxid-Einheiten ausgewählt aus der Gruppe bestehend aus Ethylenoxid (EO), Propylenoxid (PO), Butylenoxid (BO) und Styroloxid (SO) umgesetzt werden, wobei auf eine Hydroxygruppe des Alkohols im Schnitt vorzugsweise 3 bis 150 Alkylenoxideinheiten kommen.

Es ist bevorzugt, dass die mindestens eine organische Verbindung V ausgewählt ist aus der Gruppe bestehend aus Estern, Amiden, Imiden, Imidazolinen, Oxazolinen und Polyetherverbindungen. Eine bevorzugte Polyetherverbindung weist mindestens 2, bevorzugt 2 bis 100, insbesondere 3 bis 50 Ethergruppen auf.

Bevorzugt einsetzbare organische Verbindungen V können beispielsweise Derivate der Abietinsäure sein,
wie z.B. Ester der Abietinsäure 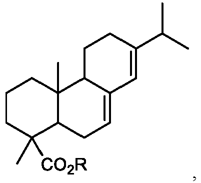
wie z.B. Amide der Abietinsäure: 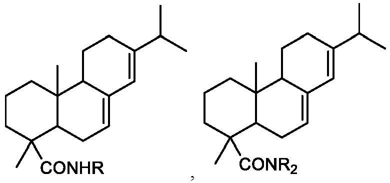
wie z.B. Abietol 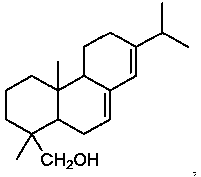 wobei
   R = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N.

Die erfindungsgemäße Zusammensetzung kann vorzugsweise weitere Bestandteile umfassen. So ist es bevorzugt, dass die erfindungsgemäße Zusammensetzung zusätzlich mindestens einen Kohlenwasserstoff KWS umfasst, welcher vorzugweise 10 bis 24 Kohlenstoff-Atome aufweist, und welcher bei einem Druck von 1,01325 bar (Normaldruck) einen Siedepunkt >100°C, vorzugsweise >150°C aufweist, besonders bevorzugt ausgewählt aus der Gruppe bestehend aus Decen, Decan, Isodecan, Isodecen, Undecen, Undecan, Isoundecan, Isoundecen, Dodecen, Dodekan, Isododecan, Isododecen, Tridecan, Tridecen, Isotridecan, Isotridecen, Tetradecan, Tetradecen, Isotetradecan, Isotetradecen, Pentadecan, Pentadecen, Isopentadecan, Isopentadecen, Hexadecan, Hexadecen, Isohexadecan, Isohexadecen, Heptadecan, Heptadecen, Isoheptadecan, Isoheptadecen, Octadecan, Octadecen, Isooctadecan, Isooctadecen, Nonadecan, Nonadecen, Isononadecan, Isononadecen, Eicosan, Eicosen, Isoeicosan, Isoeicosen, Tributen, Tributan, Tetrabuten, Tetrabutan, Alkylbenzolen mit mindestens 10 Kohlenstoffatomen und Oxoölen, wobei insgesamt enthaltener Kohlenwasserstoff KWS in Kombination mit insgesamt enthaltener organischer Verbindung V vorzugsweise im Massenverhältnis von 1:5 bis 1:200 eingesetzt werden.

Es wurde gefunden, dass der zusätzliche Einsatz von mindestens einem Kohlenwasserstoff KWS zu weiter verbesserten Eigenschaften von PU-Schaumstoffen im Sinne der Erfindung führen kann.

Es ist dabei besonders bevorzugt, dass die Siedepunkte erfindungsgemäß einsetzbarer Kohlenwasserstoffe KWS bei Normaldruck (d.h. bei einem Druck von 1,01325 bar) unter 400 °C, vorzugsweise unter 350 °C liegen. Bevorzugt einsetzbare Kohlenwasserstoffe KWS weisen also vorzugsweise bei Normaldruck (1,01325 bar) Siedepunkte von >100°C bis <400 °C, insbesondere von >100°C bis <350 °C auf. Die Kohlenwasserstoffe KWS bestehen aus Kohlenstoffatomen, Wasserstoffatomen und optional maximal 3 Heteroatomen ausgewählt aus der Gruppe bestehend aus Sauerstoff-, Stickstoff- und Schwefelatomen. Vorzugweise weisen die Kohlenwasserstoffe KWS, sofern sie Heteroatome enthalten, nur Sauerstoffatome als Heteroatome auf. Es ist bevorzugt, dass die Kohlenwasserstoffe KWS ein oder kein Heteroatom aufweisen, wobei das Heteroatom, für den Fall, dass sie eines aufweisen, ein Sauerstoffatom ist. Noch bevorzugter ist allerdings, dass die Kohlenwasserstoffe KWS keine Heteroatome aufweisen. Es ist also besonders bevorzugt, dass die Kohlenwasserstoffe KWS ausschließlich aus Kohlenstoffatomen und Wasserstoffatomen bestehen. Vorzugsweise können sowohl gesättigte als auch ungesättigte Kohlenwasserstoffe KWS zum Einsatz kommen. Vorzugsweise können aliphatische oder aromatische Kohlenwasserstoffe KWS eingesetzt werden. Die Kohlenwasserstoffe KWS können verzweigt oder unverzweigt sein. Es kann sich um cyclische oder acyclische Kohlenwasserstoffe KWS handeln.

Besonders bevorzugte Kohlenwasserstoffe KWS sind Olefine, Paraffine, Isoparaffine und/oder Alkylbenzole. Solche Materialien sind beispielsweise erhältlich von der Fa. Sasol unter den Handelsnamen: HF^{®}1000, LINPAR^{®}, SASOLAB^{®}, PARAFOL^{®}.

Bei den erfindungsgemäß bevorzugt einsetzbaren Kohlenwasserstoffen KWS handelt es sich vorzugsweise um Kohlenwasserstoffe (verzweigt oder unverzweigt, gesättigt oder ungesättigt, cyclisch oder acyclisch, aliphatisch) mit 10 bis 24 Kohlenstoff-Atomen. Diese können beispielsweise durch Oligomerisierung von Olefinen, wie z.B. in US 4647707, DE102008007081A1 oder DE102013212481A1 beschrieben, hergestellt werden.

Ebenso können beispielsweise auch entsprechende Stoffströme, die bei der Herstellung von Oxoalkoholen anfallen, verwendet werden, wie sie z.B. in US 4647707, EP1515934B1 oder EP2947064A1 beschrieben sind. Hierbei treten Zwischen- oder Nebenprodukte auf, die Oxoöle genannt werden. Bevorzugt sind hier Parafin- und Olefinhaltige Destillationsfraktionen, wie zum Beispiel die sogenannten Light Oxo Fraction, wie sie beispielsweise in US 4647707 beschrieben sind.

Ganz besonders bevorzugte erfindungsgemäß einsetzbare Kohlenwasserstoffe KWS sind ausgewählt aus der Gruppe bestehend aus Decen, Decan, Isodecan, Isodecen, Undecen, Undecan, Isoundecan, Isoundecen, Dodecen, Dodekan, Isododecan, Isododecen, Tridecan, Tridecen, Isotridecan, Isotridecen, Tetradecan, Tetradecen, Isotetradecan, Isotetradecen, Pentadecan, Pentadecen, Isopentadecan, Isopentadecen, Hexadecan, Hexadecen, Isohexadecan, Isohexadecen, Heptadecan, Heptadecen, Isoheptadecan, Isoheptadecen, Octadecan, Octadecen, Isooctadecan, Isooctadecen, Nonadecan, Nonadecen, Isononadecan, Isononadecen, Eicosan, Eicosen, Isoeicosan, Isoeicosen, Tributen, Tributan, Tetrabuten, Tetrabutan, Alkylbenzolen mit mindestens 10 Kohlenstoffatomen und Oxoölen.

Bevorzugt einsetzbare Kohlenwasserstoffe KWS sind beispielsweise verfügbar als C4 Oligomere wie Tributen, Tetrabutan und/oder Tetrabuten. Bevorzugt einsetzbare Kohlenwasserstoffe KWS sind beispielsweise die als Zwischen- und Nebenprodukte bezeichneten kommerziell erhältlichen Produkte: Oxoöl HS 9, Oxoöl LS 9 und/oder Oxoöl LS 13 von Evonik Performance Intermediates.

Ebenso können z.B. Kohlenwasserstoffe KWS verwendet werden, die aus nachwachsenden Rohstoffen hergestellt wurden, wie zum Beispiel Isododekan von der Firma Global Bioenergies (Evry Courcouronnes, Frankreich) welches beispielsweise nach dem in WO 2021/228824 beschriebenen Verfahren hergestellt werden kann.

Vorzugsweise können z.B. Kohlenwasserstoffe KWS eingesetzt werden die keine aromatischen Einheiten enthalten und aus 9 bis 21 Kohlenstoff-Atomen bestehen.

Es ist bevorzugt, dass die erfindungsgemäße Zusammensetzung zusätzlich mindestens ein Polyalkyl-Siloxan PAS umfasst, welches keine Polyether-Modifizierung aufweist und vorzugsweise weniger als 20, bevorzugter weniger als 15, besonders bevorzugt weniger als 11 Si-Atome enthält, wobei insgesamt eingesetztes Polyalkyl-Siloxan PAS in Bezug auf insgesamt eingesetzte organische Verbindung V vorzugsweise im Massenverhältnis von 1:4 bis 1:200 eingesetzt werden. Dabei ist es bevorzugt, dass das mindestens eine Polyalkyl-Siloxan PAS mindestens 2 Si-Atome aufweist.

Wenn im Rahmen der vorliegenden Erfindung von "Polyalkyl-Siloxan PAS" die Rede ist, so ist damit immer solches Polyalkyl-Siloxan bzw. Polyalkyl-Siloxan PAS gemeint, welches keine Polyether-Modifizierung aufweist.

Dabei ist es bevorzugt, dass das mindestens eine Polyalkyl-Siloxan PAS der Formel 1 genügt:

MₐD_{b}T_{c}Q_{d} (Formel 1)

mit
M = R¹¹R¹²R¹³SiO_{1/2}
D = R¹⁴R¹⁵SiO_{2/2}
T = R¹⁶SiO_{3/2}
Q = SiO_{4/2}
wobei
R¹¹, R¹², R¹³, R¹⁴, R¹⁵, R¹⁶ = unabhängig voneinander gleiche oder verschiedene Kohlenwasserstoffreste mit 1 bis 12, vorzugsweise 1 bis 8 Kohlenstoffatomen, wobei die Kohlenwasserstoffreste ggf. mit Heteroatomen substituiert sind, oder aber H, insbesondere Phenyl-, CH₃-, CH₃CH₂-, CH₂CH- ClCH₂CH₂CH₂- oder H-,
und wobei
a = 2 bis 6
b = 0 bis 8
c = 0 bis 4
d = 0 bis 2
mit der Maßgabe, dass a + b + c + d < 20, bevorzugt < 15 insbesondere bevorzugt < 11 ist, wobei es besonders bevorzugt ist, wenn
R¹⁶ unterschiedlich zu R¹¹, R¹², R¹³, R¹⁴ und R^{15 ist},
und/oder R¹¹, R¹² und R¹³ unterschiedlich sind.

Weiterhin ist es bevorzugt, dass die insgesamt eingesetzte organische Verbindung V in einer Gesamtmenge von 0,1 bis 10 Massenteilen, bevorzugt 0,5 bis 5 Massenteilen, besonders bevorzugt 1 bis 3 Massenteilen, bezogen auf 100 Massenteile der gesamten Polyol-Komponente eingesetzt wird.

Vorzugsweise können Mischungen aus mindestens einem Kohlenwasserstoff KWS, mindestens einem Polyalkyl-Siloxan PAS und mindestens einer organischen Verbindung V eingesetzt werden, besonders bevorzugt zusammen mit Trägermedien. Als optionale Trägermedien kommen beispielweise Glykole, Alkoxylate und/oder Öle synthetischer und/oder natürlicher Herkunft in Frage.

Es ist bevorzugt, wenn der gesamte Massenanteil an organischer Verbindung V, optionalem Kohlenwasserstoff KWS, und optionalem Polyalkyl-Siloxan PAS am fertigen Polyurethanschaumstoff von 0,01 bis 10 Gew.-%, bevorzugt von 0,1 bis 3 Gew.-% beträgt, bezogen auf den fertigen Polyurethanschaumstoff.

Es ist bevorzugt, wenn die mindestens eine organische Verbindung V zusammen mit mindestens einem Polyalkyl-Siloxan PAS und/oder mindestens einem Kohlenwasserstoff KWS eingesetzt wird. Es ist dabei bevorzugt, dass die Kohlenwasserstoffe KWS und/oder Polyalkylsiloxane PAS in Kombination mit der organischen Verbindung V im Massenverhältnis von 1:4 bis 1:200 in der der erfindungsgemäßen Zusammensetzung eingesetzt werden. Das Massenverhältnis stellt dabei das Verhältnis der Masse der Gesamtheit aller Kohlenwasserstoffe KWS und/oder Polyalkylsiloxane PAS zur Masse der Gesamtheit aller organischen Verbindungen V in der erfindungsgemäßen Zusammensetzung dar.

Bevorzugte Mengenverhältnisse, nur bezogen auf das Verhältnis organische Verbindung V, optionaler Kohlenwasserstoff KWS und/oder optionaler Polyalkyl-Siloxan PAS zueinander, können z.B. wie folgt sein,
insgesamt eingesetzte organische Verbindung V: 80 bis 99,5 Gew.-Teile,
insgesamt optional eingesetzter Kohlenwasserstoff KWS: 0,5 bis 20 Gew.-Teile,
insgesamt optional eingesetztes Polyalkyl-Siloxan PAS: 0,5 bis 20 Gew.-Teile,
wobei sich für diese beispielhafte Betrachtung die Gew.-Teile aus insgesamt eingesetzter organischer Verbindung V, insgesamt eingesetztem Kohlenwasserstoff KWS und insgesamt eingesetztem Polyalkyl-Siloxan PAS in der Summe zu 100 Gew.-Teilen addieren.

Wie bereits beschrieben kann die erfindungsgemäße Zusammensetzung mindestens einen Kohlenwasserstoff KWS enthalten. Falls Kohlenwasserstoff KWS enthalten ist, dann ist es bevorzugt, dass die Gesamtmenge an insgesamt eingesetzten Kohlenwasserstoff KWS, insgesamt eingesetzter organischer Verbindung V und optional insgesamt eingesetzten Polyalkyl-Siloxan PAS bezogen auf 100 Massenteile der gesamten Polyol-Komponente vorzugsweise von 0,1 bis 10 Massenteile, bevorzugt 0,5 bis 5 Massenteile und besonders bevorzugt 1 bis 3 Massenteile beträgt.

Die erfindungsgemäße Zusammensetzung kann vorzugsweise zusätzlich auch mindestens ein Polyether-modifiziertes Siloxan (PES) umfassen. Falls Polyether-modifiziertes Siloxan (PES) enthalten ist, dann ist es bevorzugt, dass das mindestens eine Polyether-modifizierte Siloxan bezogen auf 100 Massenteile der gesamten Polyol-Komponente vorzugsweise in einer Gesamtmenge von 0,1 bis 10 Massenteile, bevorzugt 0,5 bis 5 Massenteile, besonders bevorzugt 1 bis 3 Massenteile eingesetzt werden.

Wie bereits erläutert umfasst die erfindungsgemäße Zusammensetzung zur Herstellung von Polyurethanschaumstoff eine Polyisocyanat-Komponente, eine Polyol-Komponente, optional mindestens einen Katalysator, der die Ausbildung einer Urethan- oder Isocyanurat-Bindung katalysiert, optional mindestens ein Treibmittel, wobei die Zusammensetzung zusätzlich mindestens eine organische Verbindung V umfasst, wie zuvor beschrieben.

Es ist bevorzugt, wenn die erfindungsgemäße Zusammensetzung eine Zusammensetzung zur Herstellung von PU-Hartschaumstoff, vorzugsweise geschlossenzelligem PU-Hartschaumstoff ist.

Es ist bevorzugt, wenn das Verhältnis von gesamt eingesetzter Polyisocyanat-Komponente und gesamt eingesetzter Polyol-Komponente ausgedrückt als Index der Formulierung, d.h. als stöchiometrisches Verhältnis von Isocyanat-Gruppen gegenüber isocyanat-reaktiven Gruppen multipliziert mit 100, im Bereich von 150 bis 550, besonders bevorzugt 200 bis 500 liegt.

Es ist bevorzugt, wenn die gesamt eingesetzte Polyol-Komponente mindestens ein Polyesterpolyol umfasst, vorzugsweise mit Schmelzpunkten kleiner 30°C, wobei die Einsatzmenge des insgesamt eingesetzen Polyesterpolyol bezogen auf 100 Massenteile der gesamten Polyol-Komponente vorzugsweise von 20 bis 100 Massenteile, bevorzugt von 40 bis 99 Massenteile und besonders bevorzugt von 70 bis 98 Massenteile beträgt.

Es ist bevorzugt, wenn die erfindungsgemäße Zusammensetzung mindestens ein Treibmittel umfasst, vorzugsweise als Treibmittel mindestens einen Kohlenwasserstoff mit 4 oder 5 Kohlenstoffatomen, insbesondere mit 5 Kohlenstoffatomen, umfasst, und wobei die Zusammensetzung vorzugsweise keine halogenierten Treibmittel umfasst.

Eine besonders bevorzugte erfindungsgemäße Zusammensetzung umfasst folgende Bestandteile:
- eine Polyol-Komponente,
- eine Polyisocyanat-Komponente
- mindestens eine organische Verbindung V
- optional mindestens ein Katalysator,
- optional mindestens ein Treibmittel
- optional weitere Additive, vorzugsweise ausgewählt aus der Gruppe bestehend aus Füllstoffen und Flammschutzmitteln.

Wie bereits zuvor beschrieben kann eine besonders bevorzugte erfindungsgemäße Zusammensetzung vorzugsweise noch mindestens einen Kohlenwasserstoff KWS, mindestens ein Polyalkyl-Siloxan PAS und/oder mindestens ein Polyether-modifiziertes Siloxan (PES) umfassen.

Es ist bevorzugt, wenn die gesamte Einsatzmenge von mindestens einer organischen Verbindung V, mindestens einem Kohlenwasserstoff KWS, optional mindestens einem Polyalkyl-Siloxan PAS und optional mindestens einem Polyether-modifizierten Siloxan (PES), zusammen vorzugsweise von 0,1 bis 10 Massenteile, bevorzugt von 0,5 bis 5 Massenteile und besonders bevorzugt von 1 bis 3 Massenteile beträgt, bezogen auf 100 Massenteile der gesamten Polyol-Komponente.

Die Polyol-Komponente besteht aus mindestens einem Polyol und optional mindestens einer organischen Verbindung, welche mindestens zwei gegenüber Isocyanat reaktive Gruppen, vorzugsweise ausgewählt aus der Gruppe bestehend aus OH-, NH- und NH₂-Gruppen, enthält. Polyole sind organische Verbindungen, die mindestens zwei Hydroxylgruppen (-OH) enthalten. Enthält eine der vorgenannten organischen Verbindungen der Polyol-Komponente mindestens zwei OH-Gruppen, dann wird diese im Sinne der Erfindung ausschließlich den Polyolen zugerechnet. Das heißt, wenn eine organische Verbindung der Polyol-Komponente sowohl als Polyol als auch als organische Verbindung, welche mindestens zwei gegenüber Isocyanat reaktive Gruppen, vorzugsweise ausgewählt aus der Gruppe bestehend aus OH-, NH- und NH₂-Gruppen, enthält, gewertet werden kann, so wird sie im Sinne der Erfindung ausschließlich den Polyolen zugerechnet. Bezogen auf ihr Gesamtgewicht enthält die Polyol-Komponente bevorzugt mindestens 50 Gew.-% solcher Polyole, welche nur Hydroxylgruppen (-OH) als gegenüber Isocyanat reaktive Gruppen enthalten.

Bezogen auf die Gesamtanzahl der gegenüber Isocyanat reaktiven Gruppen der Polyol-Komponente ist es bevorzugt, dass diese zu mindestens 50% Hydroxylgruppen (-OH) sind.

Entsprechende Verbindungen, die üblicherweise bei der Herstellung von PU eingesetzt werden können, sind dem Fachmann bekannt und beispielsweise beschrieben im "Kunststoffhandbuch, Band 7, Polyurethane", Carl Hanser Verlag, 3. Auflage 1993, Kapitel 3.1. Üblicherweise kommen Verbindungen mit OH-Zahlen vorzugsweise im Bereich von 10 bis 1200 mg KOH/g zum Einsatz. Besonders bevorzugte Verbindungen sind alle zur Herstellung von Polyurethansystemen, insbesondere Polyurethanschaumstoffen üblicherweise verwendeten Polyetherpolyole und Polyesterpolyole. Polyetherpolyole können vorzugsweise durch Umsetzung von mehrwertigen Alkoholen oder Aminen mit Alkylenoxiden gewonnen werden. Polyesterpolyole basieren vorzugsweise auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (vorzugsweise Glykolen).

Zudem können z.B. Polyetherpolycarbonatpolyole, auf natürlichen Ölen basierende Polyole (Natural oil based polyols, NOPs, z.B. beschrieben in WO 2005/033167, US 2006/0293400, WO 2006/094227, WO 2004/096882, US 2002/0103091, WO 2006/116456, EP 1678232), Füllkörperpolyole, prepolymerbasierte Polyole und/oder Recycling-Polyole eingesetzt werden.

Recyclingpolyole sind Polyole, die aus dem chemischen Recycling, zum Beispiel durch Solvolyse, wie beispielsweise Glykolyse, Hydrolyse, Acidolyse oder Aminolyse, von Polyurethanen erhalten werden.

Üblicherweise können als Polyole Verbindungen mit OH-Zahlen vorzugsweise im Bereich von 10 bis 1200 mg KOH/g zum Einsatz kommen. Die OH-Zahl wird dabei vorzugsweise entweder gemäß der Norm DIN EN ISO 4629-1:2016-12 (ohne Katalysator) oder gemäß der Norm DIN EN ISO 4629-2:2016-12 (mit Katalysator) bestimmt.

Es ist bevorzugt, dass die Polyole bzw. die Polyol-Komponente ein zahlengemitteltes Molekulargewicht von 500 bis 15000 g/mol aufweist. Das zahlengemittelte Molekulargewicht kann dabei beispielsweise mittels Gel-Permeations-chromatographie (GPC) bestimmt werden, bevorzugt gemäß der Norm DIN EN ISO 13885-1:2021-11 (THF als Elutionsmittel), gemäß der Norm DIN EN ISO 13885-2:2021-11 (Acrylamid als Elutionsmittel) oder gemäß der Norm ISO 13885-3:2020-07 (Wasser als Elutionsmittel), besonders bevorzugt gemäß DIN EN ISO 13885-1:2021-11 (THF als Elutionsmittel)

Die Polyisocyanat-Komponente besteht aus mindestens einem Polyisocyanat mit zwei oder mehr Isocyanat-Gruppen. Geeignete Polyisocyanate im Sinne dieser Erfindung sind alle organischen Isocyanate mit zwei oder mehr Isocyanat-Gruppen, insbesondere die an sich bekannten aliphatischen, cycloaliphatischen, arylaliphatischen und vorzugsweise aromatischen, mehrwertigen Isocyanate. Beispielhaft genannt werden können hier Alkylendiisocyanate mit 4 bis 12 Kohlenstoffatomen im Alkylenrest, wie 1,12-Dodecandiisocyanat, 2-Ethyl-tetramethylen-1,4-diisocyanat, 2-Methyl-pentamethylen-1,5-diisocyanat, Tetramethylen-1,4-diisocyanat, Pentamethylendiisocyanat (PDI) und vorzugsweise Hexamethylen-1,6-diisocyanat (HMDI), cycloaliphatische Diisocyanate, wie Cyclohexan-1,3- und -1-4-diisocyanat sowie die entsprechenden Isomerengemische, 4,4'-Methylendicyclohexyldiisocyanat (H12MDI), Isophorondiisocyanat (IPDI), 2,4- und 2,6-Methylcyclohexyldiisocyanat sowie die entsprechenden Isomerengemische und vorzugsweise aromatische Di- und Polyisocyanate, wie 2,4- und 2,6-Toluoldiisocyanat (TDI) sowie die entsprechenden Isomerengemische, Naphthylendiisocyanat, Diethyltoluoldiisocyanat, 4,4'- oder 2,2'- oder 2,4'-Diphenylmethandiisocyanat (MDI) und Polymethylene-polyphenyl-polyisocyanate (PMDI, "polymeres MDI"). Die organischen Polyisocyanate können einzeln oder in Form ihrer Mischungen eingesetzt werden. Ebenso können entsprechende "Oligomere" der Diisocyanate eingesetzt werden, wie z.B. das IPDI-Trimer auf Basis des Isocyanurates, Biurete oder Urethdione. Des Weiteren ist der Einsatz von Prepolymeren auf Basis der oben genannten Isocyanate möglich. Besonders geeignet ist das als "polymeres MDI" (auch als "crude MDI" oder "Roh-MDI" bezeichnet) bekannte Gemisch aus MDI und höher kondensierten Analoga mit einer mittleren Funktionalität von 2 bis 4, sowie die verschiedenen Isomere des TDI in reiner Form oder als Isomerengemisch. Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate. Beispiele für besonders geeignete Isocyanate sind z.B. in EP 1712578, EP 1161474, WO 00/58383, US 2007/0072951, EP 1678232 und der WO 2005/085310 aufgeführt, auf die hier in vollem Umfang Bezug genommen wird.

Ein bevorzugtes Verhältnis von Polyisocyanat-Komponente und Polyol-Komponente, ausgedrückt als Index der Formulierung (Isocyanat-Index), d.h. als stöchiometrisches Verhältnis von Isocyanat-Gruppen gegenüber Isocyanat-reaktiven Gruppen (z.B. OH-Gruppen, NH-Gruppen) multipliziert mit 100, liegt im Bereich von 10 bis 1000, bevorzugt 40 bis 400. Ein Index von 100 steht für ein molares Verhältnis der reaktiven Gruppen von 1 zu 1.

In einer besonders bevorzugten Ausführungsform der Erfindung ist der Index der Formulierung vorzugsweise im Bereich 150 bis 550, besonders bevorzugt 200 bis 500. Das heißt, in einer besonders bevorzugten Ausführungsform ist vorzugsweise ein deutlicher Überschuss an Isocyanat-Gruppen zu Isocyanat-reaktiven Gruppen vorhanden. Dadurch kommt es zur Trimerisierungsreaktionen der Isocyanate, die somit Isocyanurate bilden. Diese Schaumstoff-Typen können auch als Polyisocyanurat (PIR)-Schaumstoffe bezeichnet werden und zeichnen sich durch ein verbessertes Brandverhalten, also schlechteres Brennen, aus. PIR-Schaumstoffe fallen im Sinne dieser Erfindung unter den Oberbegriff des PU-Schaumstoffs und sind besonders bevorzugt. Besonders bevorzugt umfasst dabei die Polyol-Komponente ein oder mehrere Polyesterpolyole.

Die erfindungsgemäße Zusammensetzung kann optional mindestens einen Katalysator, der die Ausbildung einer Urethan- oder Isocyanurat-Bindung katalysiert, enthalten. Geeignete Katalysatoren, die für die Herstellung von Polyurethanen, insbesondere PU-Schaumstoffen, einsetzbar sind, sind dem Fachmann aus dem Stand der Technik bekannt.

Diese können die Ausbildung einer Urethan- oder Isocyanurat-Bindung katalysieren bzw. die Reaktionen Isocyanat-Polyol und/oder Isocyanat-Wasser und/oder die Isocyanat-Trimerisierung katalysieren. Im Sinne der vorliegenden Erfindung sind vorzugsweise alle Verbindungen einsetzbar, die in der Lage sind, die Reaktion von Isocyanat-Gruppen mit OH-, NH-, oder anderen Isocyanat-reaktiven Gruppen und/oder die Reaktion von Isocyanat-Gruppen untereinander zu katalysieren. Hierbei kann vorzugsweise auf die üblichen aus dem Stand der Technik bekannten Katalysatoren zurückgegriffen werden, wie z.B. Amine (Cyclische, acyclische; Monoamine, Diamine, Oligomere mit einer oder mehreren Aminogruppen), Ammonium-Verbindungen, metallorganische Verbindungen und/oder Metallsalze, vorzugsweise die des Eisen, Bismut, Kalium und/oder Zink. Insbesondere können als Katalysatoren Gemische mehrerer solcher Verbindungen eingesetzt werden. Geeignete Einsatzmengen richten sich nach dem Typ des Katalysators und können z.B. bei Amin-Katalysatoren vorzugsweise im Bereich von 0,05 bis 5 pphp (= Gewichtsteile bezogen auf 100 Gewichtsteile Polyol) oder z.B. bei Kaliumsalzen vorzugsweise im Bereich 0,1 bis 10 pphp liegen.

Schaumstabilisatoren und deren Einsatz bei der Herstellung von PU-Schaumstoffen sind dem Fachmann wie oben beschrieben bekannt. Die erfindungsgemäß Zusammensetzung enthält mindestens eine organische Verbindung V als Schaumstabilisator.

Neben der mindestens einen organischen Verbindung V können vorzugsweise ein oder mehrere weitere Schaumstabilisatoren zusätzlich eingesetzt werden, beispielsweise Polyethersiloxan-Schaumstabilisatoren, wie zum Beispiel in CN 103665385, CN 103657518, CN 103055759, CN 103044687, US 2008/0125503, US 2015/0057384, EP 1520870 A1, EP 1211279, EP 0867464, EP 0867465 oder EP 0275563 beschrieben, und/oder beispielsweise weitere Si-freie Tenside. So wird beispielsweise in EP 2295485 A1 die Verwendung von Lecithin und z.B. in US 3746663 die Verwendung von Vinylpyrrolidon-basierten Strukturen beschrieben. Weitere Si-freie Schaumstabilisatoren sind beispielsweise in EP 2511328 B1, DE 1020011007479 A1, DE 3724716 C1, EP 0734404, EP 1985642, DE 2244350 und US 5236961 beschrieben.

Vorzugsweise können zusätzlich Kohlenwasserstoffe KWS, Polyalkylsiloxane PAS, Si-freie Surfactants und/oder optional Polyether-modifizierte Siloxane (PES) eingesetzt werden.

Treibmittel und deren Einsatz bei der Herstellung von PU-Schäumen sind dem Fachmann bekannt, wobei deren Einsatz im Sinne der Erfindung fakultativ ist, bevorzugt kann mindestens ein Treibmittel eingesetzt werden. Die bevorzugte Verwendung von einem oder einer Kombination aus mehreren Treibmitteln orientiert sich vorzugsweise an der Art des Verschäumungsverfahrens, der Art des Systems und der Anwendung des erhaltenen PU-Schaums. Es können sowohl chemische und/oder physikalische Treibmittel, als auch eine Kombination aus beiden verwendet werden. Je nach Menge des verwendeten Treibmittels kann z.B. ein Schaumstoff mit hoher oder niedriger Dichte hergestellt werden. So können Schaumstoffe z.B. mit Dichten von 5 kg/m³ bis 900 kg/ m³, bevorzugt 5 bis 350 kg/ m³, besonders bevorzugt 8 bis 200 kg/m³, insbesondere 8 bis 150 kg/m³ hergestellt werden.

Als physikalische Treibmittel können optional z.B. eine oder mehrere der entsprechenden Verbindungen mit passenden Siedepunkten, wie z.B. Kohlenwasserstoffe mit 3, 4 oder 5 Kohlenstoffatomen, bevorzugt cyclo-, iso- oder n-Pentan, Fluorkohlenwasserstoffe (HFC), wie zum Beispiel HFC 245fa, HFC 134a oder HFC 365mfc, Fluorchlorkohlenwasserstoffe (HCFC), wie zum Beispiel HCFC 141b, Hydrofluoroolefine (HFO) oder Hydrohaloolefine, bevorzugt 1234ze, 1234yf, 1224yd, 1233zd(E) oder 1336mzz, Ester, bevorzugt Methylformiat, Ketone, bevorzugt Aceton, Ether, bevorzugt, Dimethoxymethan, oder Chlorkohlenwasserstoffe, wie zum Beispiel Dichlormethan oder 1,2-Dichlorethan, sowie deren Mischungen eingesetzt werden.

Als chemische Treibmittel können optional z.B. eine oder mehrere Verbindungen eingesetzt werden, die entweder mit NCO-Gruppen unter Freisetzung von Gasen reagieren, wie z.B. Wasser oder Ameisensäure, oder durch den Temperaturanstieg während der Reaktion Gase freisetzen wie z.B. Natriumhydrogencarbonat.

Es ist besonders bevorzugt, wenn die erfindungsgemäße Zusammensetzung als Treibmittel Wasser in Kombination mit Kohlenwasserstoffen mit 5 Kohlenstoffatomen, HFO, Hydrohaloolefine oder HFC oder Mischungen davon enthält.

Bevorzugt ist die Verwendung von Kohlenwasserstoffen mit 4 oder 5 Kohlenstoffen.

Geeignete Wasser-Gehalte im Sinne dieser Erfindung hängen vorzugsweise davon ab, ob zusätzlich zum Wasser noch ein oder mehrere Treibmittel eingesetzt werden oder nicht. Es ist bevorzugt, dass bei rein Wasser getriebenen Schäumen bevorzugte Werte z.B. bei 1 bis 20 Massenteile Wasser bezogen auf 100 Massenteile Polyol liegen. Werden zusätzlich andere Treibmittel eingesetzt, verringert sich die bevorzugte Einsatzmenge vorzugsweise auf z.B. 0,1 bis 5 Massenteile Wasser bezogen auf 100 Massenteile Polyol.

Als optionale Zusatzstoffe können z.B. eine oder mehrere der nach dem Stand der Technik bekannten Substanzen verwendet werden, die bei der Herstellung von Polyurethanen, insbesondere von PU-Schaumstoffen, Verwendung finden, wie zum Beispiel Vernetzer, Kettenverlängerer, Stabilisatoren gegen oxidativen Abbau (sogenannte Antioxidantien), Flammschutzmittel, Biozide, zellverfeinernde Additive, Nukleierungsmittel, Zellöffner, feste Füllstoffe, Antistatik-Additive, Verdicker, Farbstoffe, Pigmente, Farbpasten, Duftstoffe und/oder Emulgatoren, usw.

Als optionales Flammschutzmittel kann die erfindungsgemäße Zusammensetzung z.B. eines oder mehrere der bekannten und zur Herstellung von PU-Schäumen geeigneten Flammschutzmittel, wie beispielsweise halogenhaltige oder halogenfreie organische phosphorhaltige Verbindungen, wie z.B. Triethylphosphat (TEP), Tris(1-chlor-2-propyl)phosphat (TCPP), Tris(2-chlorethyl)phosphat (TCEP), Dimethylmethanphosphonat (DMMP), Dimethylpropanphosphonat (DMPP), Diethyl (hydroxymethyl) phosphonate, Ammoniumpolyphosphat oder roter Phosphor, stickstoffhaltige Verbindungen, wie z.B. Melamin, Melamincyanurat oder Melaminpolyphosphat, oder halogenierte Verbindungen, wie z.B. chlorierte und/oder bromierte Polyether- und/oder Polyester-Polyole, enthalten. Es können auch Mischungen von verschiedenen Flammschutzmitteln eingesetzt werden.

Wenn aus dieser Beschreibung nichts anderes hervorgeht, dann kann jegliche bevorzugte oder besonders bevorzugte Ausführungsform der Erfindung mit einer oder mehrerer der übrigen bevorzugten oder besonders bevorzugten Ausführungsformen der Erfindung kombiniert werden.

Ein weiterer Gegenstand der Erfindung ist ein Verfahren zur Herstellung von Polyurethanschaumstoff, durch Umsetzung einer Polyol-Komponente mit einer Polyisocyanat-Komponente, wobei die Umsetzung in Gegenwart von mindestens einer organischen Verbindung V, wie zuvor beschrieben, vorzugsweise wie in einem der Ansprüche 1 bis 4 definiert, erfolgt, bevorzugt unter Einsatz einer Zusammensetzung wie zuvor beschrieben, besonders bevorzugt unter Einsatz einer Zusammensetzung gemäß einem der Ansprüche 1 bis 12.

Das erfindungsgemäße Verfahren zur Herstellung von PU-Schaumstoff kann nach allen bekannten Methoden durchgeführt werden, z.B. im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden und es können z.B. 1K, 1.5K oder 2K Systeme wie z.B. in EP3717538 A1, US7776934 B2, EP1400547 B1 oder EP2780384 B2 beschrieben, verwendet werden.

Eine bevorzugte Polyurethan-Schaumformulierung im Sinne dieser Erfindung ergibt ein Raumgewicht von 5 bis 900 kg/m³ und hat vorzugsweise die in Tabelle 1 genannte Zusammensetzung.

**Tabelle 1: Zusammensetzung einer bevorzugten Polyurethan-Schaumformulierung:**

| Komponente | Gewichtsteile |
|---|---|
| Polyol | 70 bis 100 |
| Amin-Katalysator | 0 bis 5 |
| Metall-Katalysator | 0 bis 10 |
| organische Verbindung V sowie vorzugsweise zusätzlich Polyalkyl-Siloxan PAS, Kohlenwasserstoff KWS und/oder Polyether-modifiziertes Siloxan (PES) | 0,1 bis 10 |
| Wasser | 0,01 bis 20 |
| Treibmittel | 0,1 bis 40 |
| Weitere Additive (Flammschutzmittel etc.) | 0 bis 40 |
| Isocyanat-Index: 70 bis 600 | |

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen. Vorzugsweise gelten diese Ausführungen.

Ein weiterer Gegenstand der Erfindung ist ein Polyurethanschaumstoff, erhältlich durch das erfindungsgemäße Verfahren.

Es ist bevorzugt, dass der Polyurethanschaumstoff ein Raumgewicht von 5 bis 900 kg/m³, bevorzugter 8 bis 800 kg/m³, noch bevorzugter 10 bis 600 kg/m³, insbesondere 30 bis 150 kg/m³ aufweist.

Es ist bevorzugt, dass der Polyurethanschaumstoff einen Lambdawert von kleiner 25, bevorzugter kleiner24, noch bevorzugter kleiner23, insbesondere kleiner 22 mW/m·K aufweist. Die Lambdawerte werden 24 Stunden nach der Verschäumung gemessen an Probekörpern mit den Maßen 20x20x2,5 cm. Es wurde entsprechend der DIN EN 12667 : 2001-05 der Lambdawert bei einer mittleren Temperatur von 10°C bestimmt.

Vorzugsweise handelt es sich beim erfindungsgemäßen Polyurethanschaumstoff (PU-Schaumstoff) um einen Polyurethan-Hartschaumstoff (PU-Hartschaumstoff), besonders bevorzugt geschlossenzelliger PU-Hartschaumstoff.

"Polyurethan-Hartschaumstoff" bzw. "PU-Hartschaumstoff" ist ein feststehender technischer Begriff. Der bekannte und prinzipielle Unterschied zwischen Weichschaumstoff- und Hartschaumstoff ist, dass ein Weichschaumstoff ein elastisches Verhalten zeigt und damit die Verformung reversibel ist.

Der Hartschaumstoff wird demgegenüber dauerhaft verformt. Im Rahmen der vorliegenden Erfindung wird unter Polyurethan-Hartschaumstoff vorzugsweise ein Schaumstoff gemäß DIN 7726:1982-05 verstanden, der vorzugsweise eine Druckfestigkeit nach DIN 53421:1984-06 / DIN EN ISO 844:2014-11 von ≥ 20 kPa, bevorzugt ≥ 80 kPa, weiter bevorzugt ≥ 100 kPa, noch weiter bevorzugt ≥ 150 kPa, besonders bevorzugt ≥ 180 kPa aufweist. Weiterhin verfügt der Polyurethan-Hartschaumstoff vorzugsweise über eine Geschlossenzelligkeit von größer 50%, bevorzugt größer 80% und besonders bevorzugt größer 90%, wobei die Geschlossenzelligkeit vorzugsweise nach DIN EN ISO 4590:2016-12 bestimmbar ist. Weiteres zu Polyurethan-Hartschaumstoffen findet man auch im "Kunststoffhandbuch, Band 7, Polyurethane", Carl Hanser Verlag, 3. Auflage 1993, Kapitel 6 beschrieben.

Vorzugsweise können die erfindungsgemäßen PU-Schaumstoffe, insbesondere PU-Hartschaumstoffe, z.B. als oder zur Herstellung von Isoliermaterialien, bevorzugt Dämmplatten, Kühlschränken, Isolierschäumen, Dachhimmeln, Verpackungsschäumen oder Sprühschäumen verwendet werden.

Ein weiterer Gegenstand der vorliegenden Erfindung ist daher die Verwendung des erfindungsgemäßen Polyurethanschaumstoffs als Dämmplatten und/oder Isolationsmittel, vorzugsweise für Kühlapparaturen. Die Kühlapparaturen weisen dabei vorzugsweise als Isoliermaterial den erfindungsgemäßen Polyurethan-Schaumstoff auf.

Insbesondere in der Kühlhaus-, Kühlgeräte- und Hausgeräteindustrie, z.B. zur Herstellung von Dämmplatten für Dächer und Wände, als Isoliermaterial in Containern und Lagerhäusern für tiefgekühlte Ware sowie für Kühl- und Gefriergeräte, können die erfindungsgemäßen PU-Schaumstoffe mit Vorteil eingesetzt werden.

Weitere bevorzugte Anwendungsfelder liegen im Fahrzeugbau, insbesondere zur Herstellung von Fahrzeughimmel, Karosserieteilen, Innenverkleidungen, Kühlfahrzeugen, Großcontainern, Transportpaletten, Verpackungslaminaten, in der Möbelindustrie, z.B. für Möbelteile, Türen, Verkleidungen, in Elektronikanwendungen.

Vorzugsweise können erfindungsgemäße PU-Schaumstoffe als Isoliermaterial für Kühlapparaturen verwendet werden.

Ein weiterer Gegenstand der Erfindung liegt in der Verwendung des PU-Schaumstoffs als Isolationsmaterial in der Kältetechnik, in Kühlmöbeln, im Bau-, Automobil-, Schiffbau- und/oder Elektronikbereich, als Dämmplatten, als Sprühschaum, als Einkomponentenschaum.

Ein weiterer Gegenstand der Erfindung liegt in der Verwendung von mindestens einer organischen Verbindung V, wie zuvor beschrieben, vorzugsweise wie in einem der Ansprüche 1 bis 4 definiert, bevorzugt in Kombination mit mindestens einem Kohlenwasserstoff KWS, wie zuvor beschrieben, vorzugsweise wie in Anspruch 5 definiert, und optional mit mindestens einem Polyalkyl-Siloxan PAS, wie zuvor beschrieben, vorzugsweise wie in Anspruch 6 oder 7 definiert, bei der Herstellung von Polyurethanschaumstoffen, vorzugsweise als Schaumstabilisator, bevorzugt zur Verbesserung der Isoliereigenschaften des Polyurethanschaumstoffs, besonders bevorzugt unter Einsatz einer erfindungsgemäßen Zusammensetzung, wie zuvor beschrieben, vorzugsweise einer erfindungsgemäßen Zusammensetzung gemäß einem der Ansprüche 1 bis 12, insbesondere zur Bereitstellung von Polyurethanschaumstoff mit Lambda-Werten kleiner 25, 24 oder 23 mW/m K.

Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden Mittelwerte angegeben, so handelt es sich, wenn nicht anderes angegeben, um Gewichtsmittel. Werden Parameter angegeben, die durch Messung bestimmt wurden, so wurden die Messungen, wenn nicht anders angegeben, bei einer Temperatur von 25 °C und vorzugsweise bei einem Druck von 1,01325 bar (Normaldruck) durchgeführt.

Die folgenden Beispiele dienen zur weiteren beispielhaften Erläuterung der vorliegenden Erfindung, doch die vorliegende Erfindung ist nicht auf die folgenden Beispiele beschränkt.

### BEISPIELE

Folgende organische Verbindungen V wurden eingesetzt:
V 1: Staybelite^{™} Ester 3-E: Triethylenglykol-Ester der Abietin-Säure von Eastman Chemical Company
V 2: Abitol^{™} E: Hydrogeniertes Abietol von Eastman Chemical Company
V 3: Hydrogral^{®}: Abietin Säure - leicht hydriert von DRT (Les Dérives Résiniques Et Terpéniques, 30 Rue Gambetta, 40100 Dax, Frankreich)
V 4: Hercolyn^{®} D: Methylester der Hydrogenierten Abietin-Säure von DRT
V 5: Staybelite^{™} Ester 10-E: Glycerin Ester der Abietin-Säure von Eastman Chemical Company
V 6: Dertoline^{®} DEG: Diethylenglykol-Ester der Abietin-Säure von DRT
V 7: Granolite^{®} TEG: Triethylenglykol-Ester der Abietin-Säure von DRT

Als Kohlenwasserstoffe KWS wurde das folgende Material eingesetzt:
KWS-A: Oxoöl LS 13 von Evonik Operations GmbH, Oxo-Öl LS 13 ist ein C12 reiches Kohlenwasserstoffgemisch mit hohem Olefingehalt, welches als Leichtsiederfraktion bei der Herstellung von Isotridecanol nach dem Oxo-Alkohol Prozess anfällt.

Als Polyalkyl-Siloxan PAS wurde das folgende Material eingesetzt:
PAS-A: Trisiloxan mit Octyl-Seitenkette entsprechend der Formel 1 aus WO2021/144033 A1 mit Mₐ D_{b} T_{c} Q_{d,}, wobei a=2; b=1; c=0; d=0; R¹¹=Methyl; R¹²=Methyl; R¹³=Methyl; R¹⁴=Octyl, R¹⁵=Methyl; wie in WO 2020/144003 A1 als PAS Nr. 5 beschrieben.

Als Polyether-modifiziertes Siloxan (PES) wurde TEGOSTAB^{®} B 84507 von Evonik Operations GmbH verwendet, im Folgenden auch kurz als B 84507 bezeichnet.

Als Vergleichssubstanzen wurden verwendet:
Oleo Nr.1: Diethanolamid auf Basis von Sojaöl und Diethanolamin, hergestellt wie in DE 102011007479 A1 in Beispiel 1b beschrieben als Amid 2.

Oleo Nr. 2: Sorbitanmonolaurat, kommerziell erhältlich als TEGO^{®} SML von Evonik Operations GmbH.

In Verschäumungsversuchen zur Herstellung von PU-Hartschäumen wurden die organischen Verbindungen V, so wie jeweils aus Tabelle 4 ersichtlich, eingesetzt, z.B. auch in Mischung mit dem Kohlenwasserstoff KWS-A oder Polyalkyl-Siloxan PAS-A und/oder zusammen mit dem Polyether-modifizierten Siloxan (PES).

Hierbei wurden folgende Mischungen verwendet, die in Tabelle 2 zusammengefasst sind.

**Tabelle 2: Beschreibung der organische Verbindung V/PAS- sowie V/KWS-Mischungen**

| | organische Verbindung V | V Gew.-% | KWS-A Gew.-% | PAS-A Gew.-% |
|---|---|---|---|---|
| Mischung 1 | V 1 | 90 | 10 | |
| Mischung 2 | V 1 | 90 | | 10 |
| Mischung 3 | V 2 | 90 | 10 | |
| Mischung 4 | V 3 | 90 | 10 | |
| Mischung 5 | V 4 | 90 | 10 | |
| Mischung 6 | V 5 | 90 | 10 | |
| Mischung 7 | V 6 | 90 | 10 | |
| Mischung 8 | V 7 | 90 | 10 | |

Zur Herstellung von Schäumen wurden die folgenden Rohstoffe eingesetzt:
Stepanpol^{®} PS 2412: Polyesterpolyol der Firma Stepan
TCPP: Tris(2-chlorisopropyl)phosphat der Firma Fyrol (Flammschutzmittel)
POLYCAT^{®} 5, von Fa. Evonik Operations GmbH, Amin-basierender Katalysator
Kosmos^{®} 70 LO von Fa. Evonik Operations GmbH, Katalysator auf Basis Kaliumoctoat
MDI (44V20): Desmodur^{®} 44V20L der Fa. Covestro, Diphenylmethan-4,4'-diisocyanat (MDI) mit Isomeren und höherfunktionellen Homologen

Die Durchführung der Verschäumungen erfolgte im Handmischverfahren. Dazu wurden alle Komponenten gemäß Tabelle 3 mit Ausnahme des Polyisocyanats (MDI) in einen Becher eingewogen und mit einem Tellerrührer (6 cm Durchmesser) 30 s bei 1000 UpM vermischt. Durch erneutes Abwiegen wurde die beim Mischvorgang verdunstete Treibmittelmenge bestimmt und wieder ergänzt. Anschließend wurde das Polyisocyanat (MDI) zugegeben und die Reaktionsmischung mit dem beschriebenen Rührer 5 s bei 3000 UpM verrührt.

Im Falle der hier verwendeten Schaum-Formulierungen für Paneel-Anwendungen wie zum Beispiel Gebäude-Isolation wurde das Gemisch sofort in eine auf 65°C thermostatisierte Aluminiumform mit den Abmessungen 50 cm x 25 cm x 7 cm eingetragen.

Die Einsatzmenge an Schaumformulierung war dabei so bemessen, dass die Menge zur Mindestbefüllung der Form ausreichte. Die Schäume wurden nach 10 Minuten entformt und anschließend für 24 Stunden bei Raumtemperatur gelagert.

Anhand einer Schnittfläche im Schaum wurde der Grad der Innenstörungen und die Porenstruktur visuell beurteilt anhand einer Skala von 1 bis 10, wobei 10 einen ungestörten Schaum und 1 einen extrem stark gestörten Schaum repräsentiert.

Die Wärmeleitzahl (λ-Wert in mW/m·K) wurde an 2,5 cm dicken Scheiben mit einem Gerät vom Typ Hesto Lambda Control, Modell HLC X206 nach einem Tag (1 d) und nach 7 Tagen (7 d) gemessen bei einer mittleren Temperatur von 10°C entsprechend den Vorgaben der Norm EN 12667:2001-05.

In Tabelle 3 ist die für die Beispiele verwendete Schaumformulierung zusammengefasst.

**Tabelle 3 (Angaben in Gewichtsteilen)**

| Formulierung | |
|---|---|
| Stepanpol^{®} PS 2412 | 100 |
| KOSMOS^{®} 70 LO | 3 |
| Polycat^{®} 5 | 0,5 |
| entweder Mischung enthaltend V, KWS oder PAS und ggf. PES oder V allein | 3 |
| TCPP | 15 |
| Wasser | 0,5 |
| Iso-Pentan | 4,5 |
| Cyclo-pentan | 10,4 |
| MDI (44V20) | 180 |

Die Ergebnisse der Verschäumungsversuche sind in Tabelle 4 zusammengefasst. Es wurden - wie oben beschrieben - Paneele hergestellt und die Lambda Werte (in mW/m·K) nach 1 Tag und 7 Tagen gemessen, sowie die Innenstörungen auf einer Skala von 1-10 bewertet. Je niedriger der Lambda Wert desto besser ist die Isolationsleistung.

**Tabelle 4: Ergebnisse der Verschäumungsversuche**

| Schaum Beispiel | Additiv | Gew. Teile | PES | PES Gew. Teile | Lambda-1d | Lambda-7d | Innenstörungen |
|---|---|---|---|---|---|---|---|
| Vgl. 1 | | | B 84507 | 3 | 21,1 | 23,7 | 7 |
| Vgl. 2 | | | B 84507 | 1 | 21,6 | 23,9 | 7 |
| Vgl. 3 | Oleo Nr. 1 | 3 | | | 22,9 | 26,2 | 7,5 |
| Vgl. 4 | Oleo Nr. 2 | 3 | | | 22,7 | 26,3 | 8 |
| 1 | Mischung Nr.1 | 3 | | | 21,0 | 24,4 | 7 |
| 2 | Mischung Nr. 2 | 3 | | | 20,8 | 24,2 | 7 |
| 3 | V 1 | 3 | | | 25,5 | 32,8 | 7 |
| 4 | Mischung Nr. 3 | 3 | | | 21,1 | 24,5 | 6,5 |
| 5 | V 2 | 3 | | | 21,5 | 24,2 | 6,5 |
| 6 | Mischung Nr. 4 | 3 | | | 23,0 | 28,9 | 3 |
| 7 | V 3 | 3 | | | 25,0 | 30,5 | 3 |
| 8 | Mischung Nr. 5 | 3 | | | 21,6 | 26,0 | 6 |
| 9 | V 4 | 3 | | | 23,2 | 26,5 | 6 |
| 10 | Mischung Nr. 2 | 2 | B 84507 | 1 | 19,9 | 22,7 | 7 |
| 11 | V 1 | 2 | B 84507 | 1 | 21,0 | 23,5 | 7 |
| 12 | Mischung Nr. 3 | 2 | B 84507 | 1 | 20.0 | 23,2 | 7 |
| 13 | V 2 | 2 | B 84507 | 1 | 21,2 | 23,7 | 6,5 |
| 14 | Mischung Nr. 6 | 2 | B 84507 | 1 | 20,9 | 26,0 | 7 |
| 15 | V 5 | 2 | B 84507 | 1 | 22,2 | 25,2 | 6 |
| 16 | Mischung Nr. 7 | 2 | B 84507 | 1 | 20.7 | 24,1 | 6,5 |
| 17 | V 6 | 2 | B 84507 | 1 | 22.2 | 25,7 | 7 |
| 18 | Mischung Nr. 8 | 2 | B 84507 | 1 | 20,3 | 24,3 | 7 |
| 19 | V 7 | 2 | B 84507 | 1 | 21,7 | 24,2 | 7 |
| 20 | Mischung Nr. 4 | 2 | B 84507 | 1 | 20,2 | 25,9 | 6,5 |
| 21 | V 3 | 2 | B 84507 | 1 | 21,5 | 25,3 | 7 |
| 22 | Mischung Nr. 5 | 2 | B 84507 | 1 | 20,3 | 23,7 | 6,5 |
| 23 | V4 | 2 | B 84507 | 1 | 22,1 | 25,2 | 6,5 |

Aus den Versuchen ist ersichtlich, dass die erfindungsgemäßen organischen Verbindungen V bzw. Mischungen enthaltend V teilweise sogar zu Schaumqualitäten führen können, die vergleichbar oder besser sind zu den Schäumen, die mit Oleo-Surfactants oder Polyether-modifizierten Siloxanen (PES) hergestellt wurden.

So erreichte man mit V 2 (in Versuch Nr. 5) bessere Ergebnisse, also niedrigere Lambda-Werte als die Oleo-Kandidaten (Vergleichsversuche 3 und 4). Mit den anderen Verbindungen V, ohne Zusätze von KWS oder PAS (Versuche 3,7 und 9), wurden höhere Lambda-Werte erhalten im Vergleich zu den Vergleichsversuchen 3 und 4.

Die Mischungen mit KWS oder PAS und den Verbindungen V zeigten teilweise sogar besonders verbesserte Schaumeigenschaften. Das ist zu erkennen in:
Beispiele 1 und 2 im Vergleich zu Beispiel 3
Beispiel 6 im Vergleich zu Beispiel 7
Beispiel 8 im Vergleich zu Beispiel 9

Bei den Versuchen, in denen die Verbindungen V mit PES oder V/KWS oder V/PAS mit PES kombiniert wurden, erkennt man, dass Kombinationen in den meisten Fällen zu besseren Lambda-Werten führen als die PES alleine. So wurden bei den Versuchen 10, 11, 12, 14, 16, 18, 20 und 22 niedrigere Lambda-Werte nach 1 Tag erreicht als in den Beispielen Vgl. 1 oder Vgl. 2.

## Patentansprüche

1. Zusammensetzung zur Herstellung von Polyurethanschaumstoff, umfassend eine Polyisocyanat-Komponente, eine Polyol-Komponente, optional mindestens einen Katalysator, der die Ausbildung einer Urethan- oder Isocyanurat-Bindung katalysiert, optional mindestens ein Treibmittel,
**dadurch gekennzeichnet, dass** die Zusammensetzung zusätzlich mindestens eine organische Verbindung V umfasst, welche mindestens einen Rest R^{A} aufweist, welcher ausgewählt ist aus der Gruppe bestehend aus 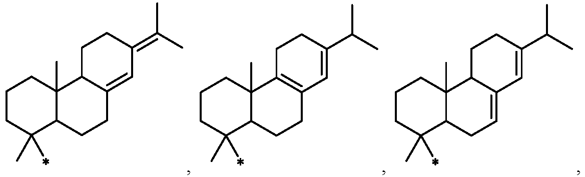 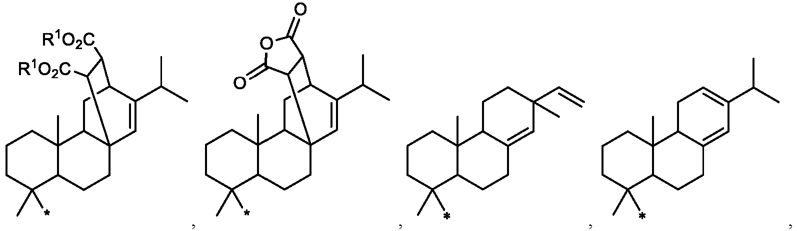 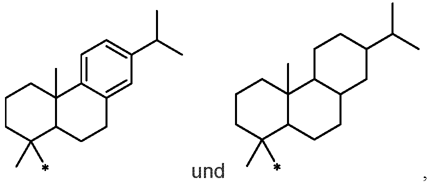
wobei mit * die Bindung an den übrigen Teil der organischen Verbindung V gekennzeichnet ist,
und wobei
R¹ = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N.

2. Zusammensetzung gemäß Anspruch 1, **dadurch gekennzeichnet, dass** die mindestens eine organische Verbindung V ausgewählt ist aus der Gruppe bestehend aus 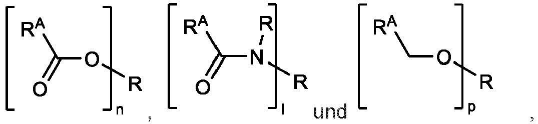 wobei
n = 1 bis 5,
l = 1 bis 5,
p = 1 bis 5,
R = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N,
R^{A} = unabhängig voneinander, gleich oder verschieden, ausgewählt ist aus der Gruppe bestehend aus 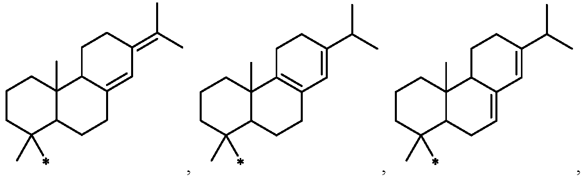 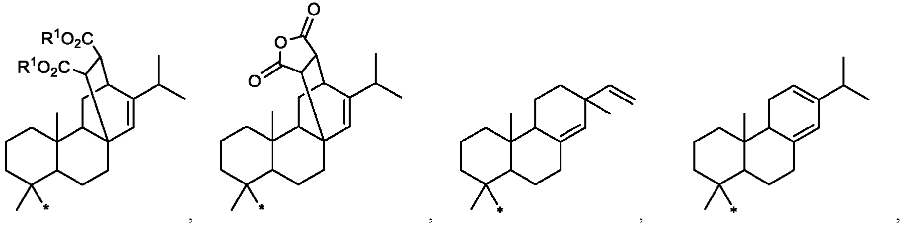 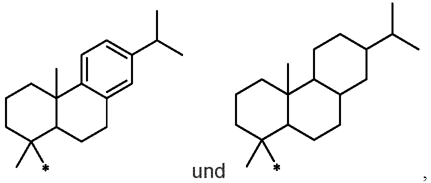
wobei mit * die Bindung an den übrigen Teil der organischen Verbindung V gekennzeichnet ist,
und wobei
R¹ = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N.

3. Zusammensetzung gemäß Anspruch 1 oder 2, **dadurch gekennzeichnet, dass** die mindestens eine organische Verbindung V ausgewählt ist aus der Gruppe bestehend aus 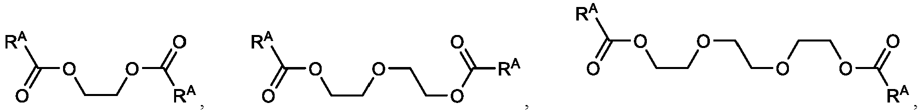 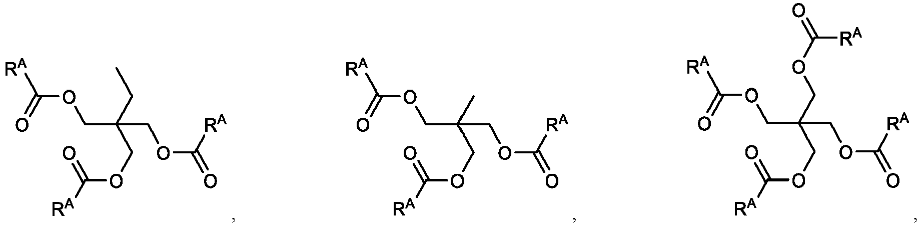 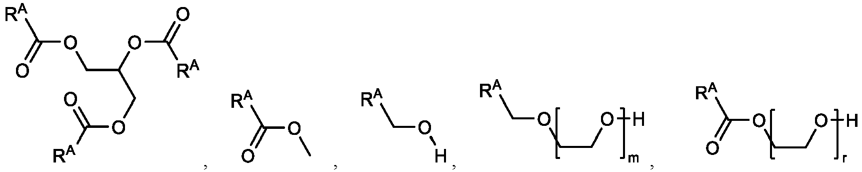 und 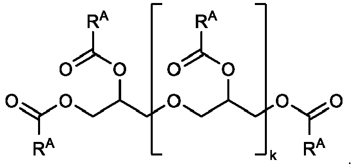 wobei
R^{A} = unabhängig voneinander, gleich oder verschieden, ausgewählt ist aus der Gruppe bestehend aus 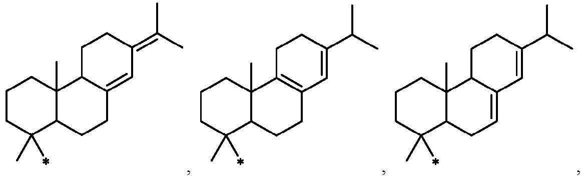 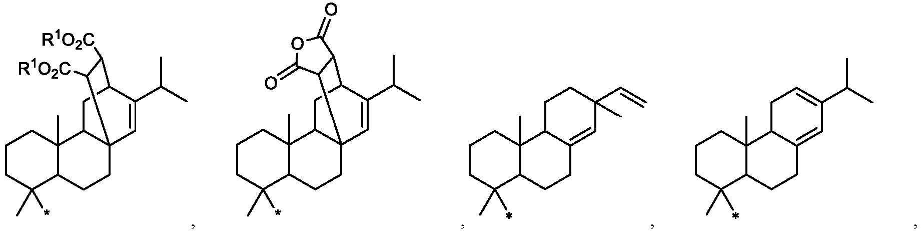 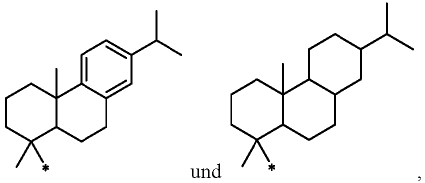
wobei mit * die Bindung an den übrigen Teil der organischen Verbindung V gekennzeichnet ist, und wobei
m = 1 bis 15,
r = 1 bis 15
k = 1 bis 6,
R¹ = unabhängig voneinander, gleich oder verschieden, H oder verzweigter oder linearer Alkyl-Rest mit 1 bis 30 Kohlenstoffatomen, der auch Heteroatome enthalten kann, wie vorzugsweise O und/oder N,
wobei der Diethylenglykol-Ester, der Triethylenglykol-Ester, der Polyglycerin-Ester, Abietol, hydriertes Abietol und/oder teilhydriertes Abietol ganz besonders bevorzugt sind.

4. Zusammensetzung gemäß einem der Ansprüche 1 bis 3, **dadurch gekennzeichnet, dass** die mindestens eine organische Verbindung V eine OH-Zahl kleiner 150, vorzugsweise kleiner 100, insbesondere kleiner 50 mg KOH/g aufweist.

5. Zusammensetzung gemäß einem der Ansprüche 1 bis 4, **dadurch gekennzeichnet, dass** sie zusätzlich mindestens einen Kohlenwasserstoff KWS umfasst, welcher vorzugweise 10 bis 24 Kohlenstoff-Atome aufweist, und welcher bei einem Druck von 1,01325 bar einen Siedepunkt >100°C, vorzugsweise >150°C aufweist, bevorzugt ausgewählt aus der Gruppe bestehend aus Decen, Decan, Isodecan, Isodecen, Undecen, Undecan, Isoundecan, Isoundecen, Dodecen, Dodekan, Isododecan, Isododecen, Tridecan, Tridecen, Isotridecan, Isotridecen, Tetradecan, Tetradecen, Isotetradecan, Isotetradecen, Pentadecan, Pentadecen, Isopentadecan, Isopentadecen, Hexadecan, Hexadecen, Isohexadecan, Isohexadecen, Heptadecan, Heptadecen, Isoheptadecan, Isoheptadecen, Octadecan, Octadecen, Isooctadecan, Isooctadecen, Nonadecan, Nonadecen, Isononadecan,
Isononadecen, Eicosan, Eicosen, Isoeicosan, Isoeicosen, Tributen, Tributan, Tetrabuten, Tetrabutan, Alkylbenzolen mit mindestens 10 Kohlenstoffatomen und Oxoölen,
wobei insgesamt enthaltener Kohlenwasserstoff KWS in Kombination mit insgesamt enthaltener organischer Verbindung V vorzugsweise im Massenverhältnis von 1:5 bis 1:200 eingesetzt werden.

6. Zusammensetzung gemäß einem der Ansprüche 1 bis 5, **dadurch gekennzeichnet, dass** sie zusätzlich mindestens ein Polyalkyl-Siloxan PAS umfasst, welches keine Polyether-Modifizierung aufweist und vorzugsweise weniger als 20, bevorzugter weniger als 15, besonders bevorzugt weniger als 11 Si-Atome enthält,
wobei insgesamt eingesetztes Polyalkyl-Siloxan PAS in Bezug auf insgesamt eingesetzte organische Verbindung V vorzugsweise im Massenverhältnis von 1:4 bis 1:200 eingesetzt werden,
vorzugsweise genügt das mindestens eine Polyalkyl-Siloxan PAS der Formel 1:
MₐD_{b}T_{c}Q_{d} (Formel 1)
mit
M = R¹¹R¹²R¹³SiO_{1/2}
D = R¹⁴R¹⁵SiO_{2/2}
T = R¹⁶SiO_{3/2}
Q = SiO_{4/2}
wobei
R¹¹, R¹², R¹³, R¹⁴, R¹⁵, R¹⁶ = unabhängig voneinander gleiche oder verschiedene Kohlenwasserstoffreste mit 1 bis 12, vorzugsweise 1 bis 8 Kohlenstoffatomen, wobei die Kohlenwasserstoffreste ggf. mit Heteroatomen substituiert sind, oder aber H, insbesondere Phenyl-, CH₃-, CH₃CH₂-, CH₂CH- ClCH₂CH₂CH₂- oder H-,
und wobei
a = 2 bis 6
b = 0 bis 8
c = 0 bis 4
d = 0 bis 2
mit der Maßgabe, dass a + b + c + d < 20, bevorzugt < 15 insbesondere bevorzugt < 11 ist, wobei es besonders bevorzugt ist, wenn
R¹⁶ unterschiedlich zu R¹¹, R¹², R¹³, R¹⁴ und R¹⁵ ist,
und/oder R¹¹, R¹² und R¹³ unterschiedlich sind.

7. Zusammensetzung gemäß einem der Ansprüche 1 bis 6, **dadurch gekennzeichnet, dass** die Einsatzmenge der insgesamt eingesetzten organischen Verbindung V bezogen auf 100 Massenteile der gesamten Polyol-Komponente von 0,1 bis 10 Massenteile, bevorzugt von 0,5 bis 5 Massenteile und besonders bevorzugt von 1 bis 3 Massenteile beträgt.

8. Zusammensetzung gemäß einem der Ansprüche 5 bis 7, **dadurch gekennzeichnet, dass** die Einsatzmenge an insgesamt eingesetztem Kohlenwasserstoff KWS, insgesamt eingesetzter organischer Verbindung V und optional insgesamt eingesetztem Polyalkyl-Siloxan PAS bezogen auf 100 Massenteile der gesamten Polyol-Komponente von 0,1 bis 10 Massenteile, bevorzugt von 0,5 bis 5 Massenteile und besonders bevorzugt von 1 bis 3 Massenteile beträgt.

9. Zusammensetzung gemäß einem der Ansprüche 1 bis 8, **dadurch gekennzeichnet, dass** sie zusätzlich mindestens ein Polyether-modifiziertes Siloxan umfasst, vorzugsweise in einer Gesamtmenge von 0,1 bis 10 Massenteilen, bevorzugt 0,5 bis 5 Massenteilen, besonders bevorzugt 1 bis 3 Massenteilen, bezogen auf 100 Massenteile der gesamten Polyol-Komponente.

10. Zusammensetzung gemäß einem der Ansprüche 1 bis 9, **dadurch gekennzeichnet, dass** das Verhältnis von gesamt eingesetzter Polyisocyanat-Komponente und gesamt eingesetzter Polyol-Komponente ausgedrückt als Index der Formulierung, d.h. als stöchiometrisches Verhältnis von Isocyanat-Gruppen gegenüber isocyanat-reaktiven Gruppen multipliziert mit 100, im Bereich von 150 bis 550, besonders bevorzugt 200 bis 500 liegt.

11. Zusammensetzung gemäß einem der Ansprüche 1 bis 10, **dadurch gekennzeichnet, dass** die gesamt eingesetzte Polyol-Komponente mindestens ein Polyesterpolyol umfasst, vorzugsweise mit Schmelzpunkten kleiner 30°C, wobei die Einsatzmenge des insgesamt eingesetzten Polyesterpolyol bezogen auf 100 Massenteile der gesamten Polyol-Komponente vorzugsweise von 20 bis 100 Massenteile, bevorzugt von 40 bis 99 Massenteile und besonders bevorzugt von 70 bis 98 Massenteile beträgt.

12. Zusammensetzung gemäß einem der Ansprüche 1 bis 11, **dadurch gekennzeichnet, dass** die Zusammensetzung mindestens ein Treibmittel umfasst, vorzugsweise als Treibmittel mindestens einen Kohlenwasserstoff mit 4 oder 5 Kohlenstoffatomen, insbesondere mit 5 Kohlenstoffatomen, umfasst, und wobei die Zusammensetzung vorzugsweise keine halogenierten Treibmittel umfasst.

13. Verfahren zur Herstellung von Polyurethanschaumstoff, durch Umsetzung einer Polyol-Komponente mit einer Polyisocyanat-Komponente, **dadurch gekennzeichnet, dass** die Umsetzung in Gegenwart von mindestens einer organischen Verbindung V, wie in einem der Ansprüche 1 bis 4 definiert, erfolgt, insbesondere unter Einsatz einer Zusammensetzung gemäß einem der Ansprüche 1 bis 12.

14. Polyurethanschaumstoff, erhältlich durch das Verfahren nach Anspruch 13.

15. Verwendung des Polyurethanschaumstoffs gemäß Anspruch 14 für Isolationszwecke, vorzugsweise als Dämmplatten und/oder Isolationsmittel, insbesondere für Kühlapparaturen.

16. Verwendung von mindestens einer organischen Verbindung V, wie in einem der Ansprüche 1 bis 4 definiert, vorzugsweise in Kombination mit mindestens einem Kohlenwasserstoff KWS, wie in Anspruch 5 definiert, und optional mindestens einem Polyalkyl-Siloxan PAS, wie in Anspruch 6 oder 7 definiert, bei der Herstellung von Polyurethanschaumstoffen, vorzugsweise als Schaumstabilisator, bevorzugt zur Verbesserung der Isoliereigenschaften des Polyurethanschaumstoffs, besonders bevorzugt unter Einsatz einer Zusammensetzung gemäß einem der Ansprüche 1 bis 12, insbesondere zur Bereitstellung von Polyurethanschaumstoff mit Lambda-Werten kleiner 25, 24 oder 23 mW/m K.
